# EUROPÄISCHE PATENTSCHRIFT

(11) **EP 3 658 771 B1**
(45) Veröffentlichungstag und Bekanntmachung des Hinweises auf die Patenterteilung: **04.09.2024**
(21) Anmeldenummer: 18743466.7
(22) Anmeldetag: 18.07.2018
(51) Int. Cl.: F03D 13/20, E04H 12/08, F03D 13/10

(54) **WINDENERGIEANLAGEN-STAHLTURMABSCHNITT FÜR EINEN WINDENERGIEANLAGEN-TURM UND VERFAHREN ZUR HERSTELLUNG**
WIND TURBINE STEEL TOWER SECTION FOR A WIND TURBINE TOWER AND METHOD FOR THE PRODUCTION THEREOF
PARTIE DE TOUR EN ACIER POUR ÉOLIENNES, POUR UNE TOUR D'ÉOLIENNE ET PROCÉDÉ POUR LA PRODUIRE

(30) Priorität: 26.07.2017 DE 102017116872
(43) Veröffentlichungstag der Anmeldung: 03.06.2020
(73) Patentinhaber: Wobben Properties GmbH, 26607 Aurich (DE)
(72) Erfinder: KERSTEN, Roy, 39291 Hohenwarthe (DE); LANGE, Ronald, 04275 Leipzig (DE); RANDEL, Britta, 39317 Elbe-Parey OT Derben (DE)
(74) Vertreter: Eisenführ Speiser
(86) Internationale Anmeldenummer: PCT/EP2018/069537
(87) Internationale Veröffentlichungsnummer: WO 2019/020464

(56) Entgegenhaltungen:
- EP-A1- 1 561 883
- EP-A1- 2 006 471
- WO-A1-03/083236
- WO-A2-2011/110235
- US-A1- 2011 283 652

## Beschreibung

Die Erfindung betrifft einen Windenergieanlagen-Stahlturmabschnitt, einen Windenergieanlagen-Turm, eine Windenergieanlage und ein Verfahren zur Herstellung eines Windenergieanlagen-Stahlturmabschnitts.

Windenergieanlagen sind grundsätzlich bekannt. Moderne Windenergieanlagen betreffen in der Regel sogenannte Horizontalachsen-Windenergieanlagen, bei denen die Rotorachse im Wesentlichen horizontal ausgerichtet ist und die Rotorblätter im Betrieb eine im Wesentlichen senkrechte Rotorfläche überstreichen. Windenergieanlagen umfassen neben einem an einer Gondel angeordneten Rotor in der Regel einen Turm, auf dem die Gondel mit dem Rotor um eine im Wesentlichen vertikal ausgerichtete Achse drehbar angeordnet ist.

Türme sind in der Regel schlanke Bauwerke, die vorzugsweise eine große Höhe aufweisen und ferner vorzugsweise orthogonal zu dieser Höhe vergleichsweise geringe Abmessungen aufweisen. Türme bestehen vorzugsweise im Wesentlichen aus Beton und/oder Stahl oder umfassen diese Materialien. Die Bandbreite von Turmausführungen reicht von Gitterkonstruktionen oder Stahlrohrtürmen mit oder ohne Seilabspannung bis hin zu Betonbauten. Eine bevorzugte Konstruktion von Windenergieanlagen-Türmen umfasst einen unteren Turmabschnitt aus Beton und/oder Stahlbeton und/oder Spannbeton und einen oberen Turmabschnitt aus Stahl.

Stahlrohrtürme können aus einem einzelnen Bauteil oder zwei oder mehreren Bauteilen bestehen oder derartige Bauteile umfassen. Türme können ferner zylindrische und/oder konische Turmabschnitte, insbesondere entlang ihrer Längserstreckung, aufweisen, wobei Türme oftmals zylindrische und konische Turmabschnitte umfassen. Darüber hinaus können derartige Turmabschnitte auch ringsegmentweise ausgebildet werden, sodass ein Turmabschnitt aus verschiedenen nebeneinander angeordneten Segmenten in Ringrichtung bzw. Umfangsrichtung zusammengesetzt ist.

Türme von Windenergieanlagen, insbesondere von modernen Horizontalachsen-Windenergieanlagen, tragen zu einem erheblichen Teil zu den Gesamtkosten der Herstellung einer Windenergieanlage bei. Insbesondere die größer werdenden Rotordurchmesser und Leistungen von Windenergieanlagen führen dazu, dass auch die Türme größer werden und/oder höheren Belastungen ausgesetzt sind. Die Türme werden einerseits hinsichtlich ihrer Höhe größer und andererseits in Bezug auf ihren Durchmesser, der bei einer Vielzahl heutiger Windenergieanlagen bereits 8 Meter und mehr aufweist. Vor allem die Fertigung und/oder Montage und/oder Logistik der Türme ist bzw. sind zeit- und kostenaufwendig. Insbesondere bei segmentierten Stahltürmen, vor allem bei Stahltürmen, die in Umfangsrichtung segmentiert sind, werden regelmäßig Verzüge festgestellt, die die Montage des Turmes erschweren.

Im Stand der Technik bestehen verschiedene Ansätze zur Reduktion der Kosten und zur Erhöhung der Arbeitssicherheit bei der Fertigung und/oder Montage von Windenergieanlagen-Türmen. Beispielsweise wird in der DE 10 2011 077 428 A1 ein Windenergieanlagen-Turm mit einer Mehrzahl von Turmsegmenten beschrieben, wobei die Turmsegmente an horizontalen und vertikalen Flanschen aneinanderstoßen und hier miteinander befestigt sind. In den am 8. August 2016 und 22. März 2017 eingereichten deutschen Patenanmeldungen der hiesigen Anmelderin werden unterschiedliche Konzepte segmentierter Türme gezeigt. In der DE 10 2005 012 497 A1 wird hingegen eine Arbeitsbühne für einen Innenraum eines Windenergieanlagen-Turmes vorgeschlagen, die im Inneren eines turmartigen Bauwerks auch dann verwendet werden kann, wenn der Turm oben durch einen Aufbau verschlossen ist. Die DE 20 321 855 U1 zeigt einen in Umfangsrichtung segmentierten Stahlturm, wobei die nebeneinander angeordneten Segmente Vertikalflansche aufweisen. Ferner zeigt die WO 2011/110235 A2 einen Wandabschnitt für einen Turm einer Windkraftanlage, umfassend ein erstes und zweites Wandsegment, die durch ein Verbindungselement miteinander verbunden sind. Die WO 03/083236 A1 betrifft einen Turm mit einer tragenden Metallgitterstruktur, die eine nichttragende Hülle umschließt.

Die existierenden Systeme und Verfahren zum Aufbau und zur Fertigung von Windenergieanlagen-Türmen bieten verschiedene Vorteile, jedoch sind weitere Verbesserungen wünschenswert. Es ist daher eine Aufgabe der vorliegenden Erfindung, Windenergieanlagen-Stahlturmabschnitt, einen Windenergieanlagen-Turm, eine Windenergieanlage und ein Verfahren zur Herstellung eines Windenergieanlagen-Stahlturmabschnitts bereitzustellen, welche einen oder mehrere der genannten Nachteile vermindern oder beseitigen. Insbesondere ist es eine Aufgabe der Erfindung, eine Lösung bereitzustellen, die die Montage einer Windenergieanlage vereinfacht und/oder deren Kosten reduziert. Insbesondere ist es eine Aufgabe der Erfindung, eine Lösung bereitzustellen, die die Kosten einer Windenergieanlage, insbesondere die Kosten der Fertigung und/oder Montage eines Windenergieanlagen-Turmes, reduziert und/oder die Arbeitssicherheit bei der Fertigung und/oder Montage einer Windenergieanlage erhöht.

Das Deutsche Patent- und Markenamt hat in der Prioritätsanmeldung zur vorliegenden Anmeldung folgenden Stand der Technik recherchiert: DE 10 2011 077 428 A1, DE 10 2005 012 497 A1, DE 203 21 855 U1, EP 2 006 471 B1, DE 11 2010 005 382 T5.

Diese Aufgabe wird gelöst durch ein Windenergieanlagen-Stahlturmabschnitt für einen Windenergieanlagen-Turm, umfassend ein erstes Windenergieanlagen-Stahlturmringsegment mit einer ersten Vertikalstoßseite, ein zweites Windenergieanlagen-Stahlturmringsegment mit einer zweiten Vertikalstoßseite, ein Laschenelement, das an einem Stoß angeordnet ist und mit dem ersten Windenergieanlagen-Stahlturmringsegment und dem zweiten Windenergieanlagen-Stahlturmringsegment verbunden ist, wobei das erste Windenergieanlagen-Stahlturmringsegment mit der ersten Vertikalstoßseite und das zweite Windenergieanlagen-Stahlturmringsegment mit der zweiten Vertikalstoßseite an dem Stoß aneinander angeordnet sind, und wobei das Laschenelement ein von dem Laschenelement auskragendes Anschlusselement zur Anordnung von Funktionselementen aufweist.

Der Windenergieanlagen-Stahlturmabschnitt weist vorzugsweise eine ringförmige Geometrie auf, sodass dieser in Umfangsrichtung eine zumindest teilweise geschlossene Wandung aufweist. Wenn der Windenergieanlagen-Stahlturmabschnitt insgesamt zwei Windenergieanlagen-Stahlturmringsegmente aufweist, ist es besonders bevorzugt, dass die Windenergieanlagen-Stahlturmringsegmente jeweils eine Erstreckung von 180° in Umfangsrichtung aufweisen. Der Windenergieanlagen-Stahlturmabschnitt kann auch drei oder mehr Windenergieanlagen-Stahlturmringsegmente aufweisen, die vorzugsweise jeweils mit einem im Vorherigen beschriebenen Laschenelement verbunden sind. Insbesondere ist es bevorzugt, dass der Windenergieanlagen-Stahlturmabschnitt insgesamt acht Windenergieanlagen-Stahlturmringsegmente aufweist. Der erfindungsgemäße Windenergieanlagen-Stahlturmabschnitt kann somit eine ringförmige oder teilringförmige Geometrie aufweisen.

Die Windenergieanlagen-Stahlturmringsegmente umfassen vorzugsweise Mantelsegmente. Ferner ist es bevorzugt, dass die Windenergieanlagen-Stahlturmringsegmente jeweils eine Erstreckung in Richtung einer Segmenthöhe, einer Segment-Ringrichtung und einer Segmentdicke aufweisen. Die Segment-Ringrichtung kann auch als Umfangsrichtung verstanden werden, wobei sich ein Windenergieanlagen-Stahlturmringsegment insbesondere zwischen den zwei Vertikalstoßseiten in Segment-Ringrichtung erstreckt. Die Segmentdicke ist in der Regel die Materialstärke.

Im eingebauten Zustand ist die Segmenthöhe des Windenergieanlagen-Stahlturmringsegments vorzugsweise und im Wesentlichen parallel zu einer Längsachse des Windenergieanlagen-Turmes ausgerichtet. Abweichungen von einer idealen Parallelität sind möglich, da ein Windenergieanlagen-Stahlturmringsegment für einen konischen Turmabschnitt eine derartig ausgerichtete Segmenthöhe aufweist, die im Vergleich zur Längsachse des Windenergieanlagen-Turmes geneigt sein kann. Die Segment-Ringrichtung verläuft im eingebauten Zustand im Wesentlichen parallel zur Umfangsrichtung des Windenergieanlagen-Turmes, sodass diese in einer im Wesentlichen tangentialen Richtung verläuft. Dies gilt ebenso für unrunde Turmquerschnitte, die beispielsweise eine polygonale Geometrie aufweisen können. Die Segmentdicke ist im Wesentlichen orthogonal zur Segmenthöhe und zur Segment-Ringrichtung ausgerichtet, sodass die Segmentdicke im eingebauten Zustand im Wesentlichen in radialer Richtung des Windenergieanlagen-Turmes ausgerichtet ist.

Die erste Vertikalstoßseite des ersten Windenergieanlagen-Stahlturmringsegments und die zweite Vertikalstoßseite des zweiten Windenergieanlagen-Stahlturmringsegments sind im eingebauten Zustand im Wesentlichen vertikal ausgerichtet. Um einer sich verjüngenden Geometrie von Windenergieanlagen-Türmen gerecht zu werden, können die erste Vertikalstoßseite und/oder die zweite Vertikalstoßseite auch eine geringfügig geneigte und somit eine geringfügige Abweichung von der idealen Vertikale aufweisen.

Die erste Vertikalstoßseite und/oder die zweite Vertikalstoßseite erstrecken sich vorzugsweise abschnittsweise oder vollständig jeweils entlang einer Seite des ersten Windenergieanlagen-Stahlturmringsegments und/oder des zweiten Windenergieanlagen-Stahlturmringsegments. Das erste Windenergieanlagen-Stahlturmringsegment und/oder die erste Vertikalstoßseite und/oder das zweite Windenergieanlagen-Stahlturmringsegment und/oder die zweite Vertikalstoßseite sind derart angeordnet und ausgebildet, dass diese an einem Stoß, insbesondere einem vertikalen Stoß, aneinander angeordnet werden können. Insbesondere sind diese derart angeordnet und ausgebildet, dass das Laschenelement im Bereich des Stoßes mit dem ersten Windenergieanlagen-Stahlturmringsegment und dem zweiten Windenergieanlagen-Stahlturmringsegment verbunden werden kann. Vorzugsweise ist der Windenergieanlagen-Stahlturmabschnitt im Bereich des Stoßes abgedichtet. Die Abdichtung kann beispielsweise mit einer Dichtmasse oder einer Dichtung erfolgen.

Das Laschenelement dient der Verbindung der zwei Windenergieanlagen-Stahlturmringsegmente, wobei das Laschenelement einerseits mit dem ersten Windenergieanlagen-Stahlturmringsegment und andererseits mit dem zweiten Windenergieanlagen-Stahlturmringsegment verbunden ist. Im Betriebszustand können das erste Windenergieanlagen-Stahlturmringsegment und das zweite Windenergieanlagen-Stahlturmringsegment am Stoß voneinander beabstandet sein und insbesondere durch das Laschenelement in Position gehalten werden. Mittels des Laschenelements wird insbesondere eine ein-, zwei- und/oder mehrschnittige Verbindung eingerichtet.

Beispielsweise kann ein Segmentabstand zwischen den zwei Windenergieanlagen-Stahlturmringsegmenten 10 mm betragen. Der Stoß kann darüber hinaus mit einem geeigneten Material abgedichtet sein. Der Stoß kann von außen mit einer elastischen Abdichtung versehen werden, sodass der am Stoß gebildete Hohlraum vor äußeren Einflüssen geschützt ist. Die elastische Abdichtung kann beispielsweise in den Spalt zwischen den zwei Windenergieanlagen-Stahlturmringsegmenten von außen eingebracht werden. Als Material für die elastische Abdichtung kann beispielsweise ein einkomponentiger polymermodifizierter Dichtstoff verwendet werden.

Erfindungsgemäß weist das Laschenelement ein von dem Laschenelement auskragendes Anschlusselement zur Anordnung von Funktionselementen auf. Das Anschlusselement ist insbesondere derart angeordnet und ausgebildet, dass an diesem Tragstrukturen anordenbar sind. Wie im weiteren Verlauf noch beschrieben werden wird, kann das Anschlusselement auf unterschiedlichste Art und Weise an dem Laschenelement angeordnet werden, wobei dieses einstückig mit dem Laschenelement ausgebildet sein oder an dem Laschenelement, beispielsweise mittels Schweißen und/oder eines weiteren Elementes, angeordnet sein kann.

Der Erfindung liegt unter anderem die Erkenntnis zugrunde, dass das Anschweißen von Tragstrukturen an den flächenausbildenden Wänden, insbesondere den Mantelsegmenten, von Windenergieanlagen-Stahlturmringsegmenten regelmäßig mit einem Verzug ebendieser Windenergieanlagen-Stahlturmringsegmente resultiert. Darüber hinaus werden durch das Einbringen der Wärme während des Schweißprozesses die Materialeigenschaften des Stahls verändert, sodass das Windenergieanlagen-Stahlturmringsegment gegebenenfalls nicht mehr die ursprünglich festgelegten und eingestellten Materialeigenschaften, wie beispielsweise Festigkeit und/oder Härte, aufweist. Der Verzug des Mantelsegments resultiert ferner in einer deutlich aufwendigeren Montage, da die Windenergieanlagen-Stahlturmringsegmente durch den Verzug keine optimale Passung mehr aufweisen. Daraus folgt unter anderem auch, dass die Türme während der Montage gespannt werden und diese Spannung zu gegebenenfalls unerwünschten Spannungsverhältnissen im Turm führen.

Diese Nachteile können durch ein erfindungsgemäß ausgebildetes und angeordnetes Laschenelement mit einem auskragenden Anschlusselement vermindert oder beseitigt werden, wobei das Anschlusselement von dem Laschenelement absteht. An diesem Anschlusselement können dann unterschiedliche weitere Vorrichtungen und/oder Einheiten und/oder Elemente befestigt werden, sodass diese vormals im Mantelsegment anzuordnenden Vorrichtungen und/oder Einheiten und/oder Elemente nun direkt am Anschlusselement befestigt werden können und somit nicht mehr unmittelbar am Mantelsegment angeschweißt werden.

Das erfindungsgemäß ausgebildete und angeordnete Anschlusselement hat den besonderen Vorteil, dass hier mit geringen Kosten Funktionselemente angeordnet werden können. Derartige Funktionselemente können beispielsweise Tragstrukturen, an denen Montagepodeste angeordnet werden, sein. Darüber hinaus können an den Anschlusselementen auch Versorgungseinrichtungen, wie beispielsweise Kabel oder Kabelstränge oder Kabelstranghaltevorrichtungen angeordnet werden. Ein weiterer Vorteil des erfindungsgemäßen Laschenelements mit einem auskragenden Anschlusselement ist die Möglichkeit der seriellen Fertigung des Laschenelements mit dem auskragenden Anschlusselement, sodass hier die Kosten weiter reduziert werden können.

In einer bevorzugten Ausführungsvariante des Windenergieanlagen-Stahlturmabschnitts ist vorgesehen, dass das erste Windenergieanlagen-Stahlturmringsegment und oder das zweite Windenergieanlagen-Stahlturmringsegment einen teilringförmigen Querschnitt aufweist bzw. aufweisen, wobei eine Flächennormale dieses Querschnitts im Wesentlichen parallel zur Segmenthöhe ausgerichtet ist, und der teilringförmige Querschnitt einen teilkreisförmigen Verlauf aufweist, und/oder der teilringförmige Querschnitt durch zwei oder mehrere gerade Abschnitte ausgebildet wird, wobei die zwei oder mehreren geraden Abschnitte einen Abkantwinkel einschließen. Der Abkantwinkel beträgt vorzugsweise 175° oder 174°. Ein derartig abgekantetes Windenergieanlagen-Stahlturmringsegment wird vorzugsweise mittels einer 180 mm Abkantmatrize hergestellt.

Gemäß einer weiteren bevorzugten Ausführungsvariante des Windenergieanlagen-Stahlturmabschnitts ist vorgesehen, dass das Laschenelement und das Anschlusselement einen Anschlusswinkel einschließen, und/oder das Anschlusselement in eine Auskragrichtung auskragt und die Auskragrichtung im Wesentlichen radial ausgerichtet ist.

Bei dem Einschließen eines Anschlusswinkels durch das Laschenelement und das Anschlusselement weist das Anschlusselement insbesondere eine wesentliche Erstreckungsrichtung auf, die zumindest eine Richtungskomponente aufweist, die orthogonal zu einer flächigen Erstreckung des Laschenelements ausgerichtet ist. Die radiale Ausrichtung der Auskragrichtung des Anschlusselementes ist insbesondere in Bezug auf einen ringförmig ausgebildeten Windenergieanlagen-Stahlturmabschnitt gerichtet. Im Falle eines teilringförmig ausgebildeten Windenergieanlagen-Stahlturmabschnitt ist die radiale Richtung insbesondere dahingehend zu verstehen, dass diese in der radialen Richtung des aufzubauenden Turmes ausgerichtet ist.

Erfindungsgemäß ist das Anschlusselement mit dem Laschenelement stoffschlüssig, insbesondere durch Schweißen, verbunden ist. Darüber hinaus kann das Anschlusselement mit dem Laschenelement mittels mindestens eines Befestigungselements, beispielsweise einer Schraube, verbunden sein.

Ferner ist es bevorzugt, dass das Anschlusselement einen Befestigungsabschnitt aufweist, wobei das Anschlusselement mit dem Befestigungsabschnitt verbunden ist, und/oder das Anschlusselement einstückig mit dem Befestigungsabschnitt ausgebildet ist, und vorzugsweise als Winkelelement ausgebildet ist. Das Anschlusselement ist vorzugsweise stoffschlüssig, beispielsweise mittels Schweißen, und/oder mittels Befestigungselemente mit dem Befestigungsabschnitt verbunden. Das Winkelelement ist vorzugsweise mit dem Befestigungsabschnitt an dem Laschenelement befestigt und das gewinkelt zu diesem angeordnete Anschlusselement kragt von dem Laschenelement und von dem Befestigungsabschnitt aus.

Eine weitere besonders bevorzugte Ausführungsvariante des Windenergieanlagen-Stahlturmabschnitts sieht vor, dass sich das Laschenelement von einem ersten Vertikalende zu einem zweiten Vertikalende und von einem oberen Horizontalende zu einem unteren Horizontalende erstreckt. Ferner können ein erstes Anschlusselement an dem ersten Vertikalende und ein zweites Anschlusselement an dem zweiten Vertikalende angeordnet sein. Insbesondere ist es bevorzugt, dass das erste Anschlusselement und das zweite Anschlusselement die gleiche Beabstandung zu einer ersten oberen Horizontalstoßseite und/oder einer ersten unteren Horizontalstoßseite des ersten Windenergieanlagen-Stahlturmringsegments und/oder zu einer zweiten oberen Horizontalstoßseite und/oder einer zweiten unteren Horizontalstoßseite des zweiten Windenergieanlagen-Stahlturmringsegments aufweisen. Ferner können das erste Anschlusselement und das zweite Anschlusselement die gleiche Beabstandung zu dem oberen Horizontalende und/oder dem unteren Horizontalende des Laschenelements aufweisen.

Die Vertikalenden bilden insbesondere die seitlichen Begrenzungen des Laschenelements im Betrieb aus. Die Horizontalenden bilden insbesondere das obere und das untere Ende des Laschenelementes aus. Die Vertikalerstreckung des Laschenelementes zwischen dem oberen Horizontalende und dem unteren Horizontalende beträgt vorzugsweise sechs Meter. Insbesondere ist es bevorzugt, dass das Anschlusselement an dem ersten Vertikalende und/oder an dem zweiten Vertikalende angeordnet ist. Ferner ist es bevorzugt, dass das Anschlusselement von dem ersten Vertikalende und/oder dem zweiten Vertikalende ausgehend von dem Laschenelement auskragt.

Das Anschlusselement kann sich in Richtung einer Anschlusshöhe, einer Anschlussbreite und einer Anschlussdicke erstrecken, wobei es insbesondere bevorzugt ist, dass das Anschlusselement durch die Erstreckung in Richtung der Anschlusshöhe und der Anschlussbreite eine im Wesentlichen flächige Erstreckung aufweist. Ferner ist es bevorzugt, dass die Erstreckung des Anschlusselements in Richtung der Anschlusshöhe um ein Vielfaches geringer ist als eine Erstreckung des ersten Windenergieanlagen-Stahlturmringsegments und/oder des zweiten Windenergieanlagen-Stahlturmringsegments in Richtung einer im Wesentlichen parallel zu der Anschlusshöhe ausgerichteten Segmenthöhe, und/oder vorzugsweise die Erstreckung des Anschlusselements in Richtung der Anschlusshöhe kleiner 20 %, und/oder kleiner 15 %, und/oder kleiner 10 %, und/oder kleiner 5 %, und/oder kleiner 2 %, und/oder kleiner 1 %, und/oder kleiner 0,1 % der Erstreckung des ersten Windenergieanlagen-Stahlturmringsegments und/oder des zweiten Windenergieanlagen-Stahlturmringsegments in Richtung der Segmenthöhe ist. Das Anschlusselement weist vorzugsweise die gleiche Materialstärke auf, wie das Windenergieanlagen-Stahlturmringsegment.

Gemäß einer weiteren bevorzugten Ausführungsvariante des Windenergieanlagen-Stahlturmabschnitts ist vorgesehen, dass das Laschenelement auf einer Innenumfangsfläche und/oder einer Außenumfangsfläche des ersten Windenergieanlagen-Stahlturmringsegments und des zweiten Windenergieanlagen-Stahlturmringsegments angeordnet ist. Insbesondere ist eine Anordnung auf der Innenumfangsfläche des ersten Windenergieanlagen-Stahlturmringsegments und des zweiten Windenergieanlagen-Stahlturmringsegments bevorzugt, sodass eine im Wesentlichen durchgehende Außenumfangsfläche des entstehenden Windenergieanlagen-Turmes entsteht, die insbesondere ästhetischen Anforderungen genügt. Lediglich die Stoßstellen und gegebenenfalls Befestigungselemente könnten infolgedessen auf der Außenumfangsfläche des Windenergieanlagen-Turmes erkennbar sein.

Eine weitere bevorzugte Fortbildung des Windenergieanlagen-Stahlturmabschnitts zeichnet sich dadurch aus, dass das Laschenelement einen ersten Laschenabschnitt aufweist, der im Wesentlichen an dem ersten Windenergieanlagen-Stahlturmringsegment angeordnet ist, und/oder einen zweiten Laschenabschnitt aufweist, der im Wesentlichen an dem zweiten Windenergieanlagen-Stahlturmringsegment angeordnet ist, wobei vorzugsweise der erste Laschenabschnitt und der zweite Laschenabschnitt einen Laschenwinkel einschließen.

Das Laschenelement weist vorzugsweise eine Knicklinie auf, die den ersten Laschenabschnitt von dem zweiten Laschenabschnitt abgrenzt. Die Knicklinie kann auch als Biegelinie verstanden werden, an der das Laschenelement derart gebogen wurde, dass der erste Laschenabschnitt und der zweite Laschenabschnitt den Laschenwinkel einschließen. Die Knicklinie des Laschenelements ist vorzugsweise parallel zu dem Stoß angeordnet. Das Laschenelement ist insbesondere derart angeordnet und ausgebildet, dass der eingeschlossene Laschenwinkel nach innen ausgerichtet ist.

Eine weitere besonders bevorzugte Ausführungsvariante des Windenergieanlagen-Stahlturmabschnitts sieht vor, dass das Laschenelement mit seiner Haupterstreckungsrichtung im Wesentlichen parallel zu einer Segmenthöhe angeordnet ist und das Laschenelement in seiner Haupterstreckungsrichtung eine Laschenerstreckung von mehr als 20%, mehr als 30%, mehr als 40%, mehr als 50%, mehr als 60%, mehr als 70%, mehr als 80%, mehr als 90% der Segmenterstreckung in Richtung der Segmenthöhe aufweist.

Das Laschenelement ist vorzugsweise plattenförmig ausgebildet, dessen Materialstärke im Wesentlichen radial und/oder parallel zur Materialstärke der Windenergieanlagen-Stahlturmringsegmente ausgerichtet ist. Insbesondere ist es bevorzugt, dass das obere Horizontalende des Laschenelementes von der oberen Horizontalstoßseite des ersten Windenergieanlagen-Stahlturmringsegments und/oder des zweiten Windenergieanlagen-Stahlturmringsegments beabstandet ist. Ferner ist es bevorzugt, dass das untere Horizontalende von der unteren Horizontalstoßseite des ersten Windenergieanlagen-Stahlturmringsegments und/oder des zweiten Windenergieanlagen-Stahlturmringsegments beabstandet ist.

Gemäß einer weiteren bevorzugten Ausführungsvariante des Windenergieanlagen-Stahlturmabschnitts ist vorgesehen, dass der erste Laschenabschnitt an einem ersten Endabschnitt des ersten Windenergieanlagen-Stahlturmringsegments angeordnet ist, wobei der erste Endabschnitt an die erste Vertikalstoßseite angrenzt, und/oder der zweite Laschenabschnitt an einem zweiten Endabschnitt des zweiten Windenergieanlagen-Stahlturmringsegments angeordnet ist, wobei der zweite Endabschnitt an die zweite Vertikalstoßseite angrenzt, und vorzugsweise der erste Endabschnitt und der zweite Endabschnitt einen Segmentwinkel einschließen. Darüber hinaus ist es bevorzugt, dass das Laschenelement mit dem ersten Laschenabschnitt an dem ersten Endabschnitt des ersten Windenergieanlagen-Stahlturmringsegments verbunden ist und mit dem zweiten Laschenabschnitt an dem zweiten Endabschnitt des zweiten Windenergieanlagen-Stahlturmringsegments verbunden ist.

Ferner ist es bevorzugt, dass der Segmentwinkel und der Laschenwinkel im Wesentlichen gleich groß sind. Das Laschenelement weist somit eine Ausbildung auf, die korrespondierend zu dem ersten Endabschnitt und dem zweiten Endabschnitt ist. Insbesondere kann der erste Laschenabschnitt im Wesentlichen flächenparallel zum ersten Windenergieanlagen-Stahlturmringsegment, insbesondere zum ersten Endabschnitt, und der zweite Laschenabschnitt im Wesentlichen flächenparallel zum zweiten Windenergieanlagen-Stahlturmringsegment, insbesondere zum zweiten Endabschnitt, angeordnet werden. Infolgedessen kann eine besonders vorteilhafte Verbindung der zwei Windenergieanlagen-Stahlturmringsegmente erfolgen.

Es ist ferner bevorzugt, dass das erste Windenergieanlagen-Stahlturmringsegment und/oder das zweite Windenergieanlagen-Stahlturmringsegment und/oder das Laschenelement Befestigungsöffnungen aufweisen, die angeordnet und ausgebildet sind, Befestigungselemente aufzunehmen. Insbesondere ist es bevorzugt, dass die Befestigungselemente als Schrauben ausgebildet sind. Die Befestigungsöffnungen an dem ersten Windenergieanlagen-Stahlturmringsegment und/oder an dem zweiten Windenergieanlagen-Stahlturmringsegment und/oder an dem Laschenelement sind vorzugsweise vertikal benachbart zueinander angeordnet. Insbesondere sind die Befestigungsöffnungen des Laschenelementes korrespondierend zu den Befestigungsöffnungen des ersten Windenergieanlagen-Stahlturmringsegments und/oder des zweiten Windenergieanlagen-Stahlturmringsegments angeordnet. Das bedeutet insbesondere, dass das Laschenelement ein Lochmuster aufweist, das korrespondierend zu dem Lochmuster der zwei Windenergieanlagen-Stahlturmringsegmente ausgebildet ist.

Die Befestigungsöffnung an dem ersten Windenergieanlagen-Stahlturmringsegment und dem zweiten Windenergieanlagen-Stahlturmringsegment und dem Laschenelement sind insbesondere derart angeordnet und ausgebildet, dass die Windenergieanlagen-Stahlturmringsegmente und das Laschenelement verbunden werden können, wobei vorzugsweise die Befestigungsöffnungen eine radial ausgerichtete Durchtrittsöffnung aufweisen. Ferner ist es bevorzugt, dass der Befestigungsabschnitt des Anschlusselementes eine zu den Befestigungsöffnungen korrespondierende Durchgangsöffnung aufweist, sodass beispielsweise ein Befestigungselement durch die Befestigungsöffnung des ersten Windenergieanlagen-Stahlturmringsegments, durch eine Befestigungsöffnung des Laschenelements hindurchführbar ist und zuletzt auch durch die Durchgangsöffnung des Anschlusselementes hindurchführbar ist, sodass das Laschenelement, das Anschlusselement und das erste Windenergieanlagen-Stahlturmringsegment fest miteinander verbunden werden.

Gemäß einer weiteren bevorzugten Ausführungsvariante des Windenergieanlagen-Stahlturmabschnitts ist vorgesehen, dass die Beabstandung der Befestigungsöffnungen in einem oberen Laschenendabschnitt, der dem oberen Horizontalende zugewandt ist, und/oder in einem unteren Laschenendabschnitt, der dem unteren Horizontalende zugewandt ist, geringer ist als die Beabstandung der Befestigungsöffnungen in einem Laschenmittenabschnitt, der zwischen dem oberen Laschenendabschnitt und dem unteren Laschenendabschnitt angeordnet ist.

Insbesondere ist es bevorzugt, dass der obere Laschenendabschnitt von dem oberen Horizontalende beabstandet ist und/oder der untere Laschenendabschnitt von dem unteren Horizontalende beabstandet ist. Insbesondere ist es bevorzugt, dass die zuvor genannte Beabstandung mehr als 200 mm und/oder mehr als 300 mm und/oder mehr als 400 mm beträgt. In dem Laschenmittenabschnitt ist es besonders bevorzugt, dass die Beabstandung der Befestigungsöffnung größer 100 mm und/oder größer 150 mm und/oder größer 200 mm beträgt. In dem oberen Laschenendabschnitt und/oder in dem unteren Laschenendabschnitt sind die Befestigungsöffnungen vorzugsweise mit einem minimalen Abstand voneinander beabstandet.

Gemäß einem weiteren Aspekt wird die eingangs genannte Aufgabe gelöst durch einen Windenergieanlagen-Turm, umfassend zwei oder mehrere übereinander angeordnete Windenergieanlagen-Stahlturmabschnitte nach mindestens einer der im Vorherigen beschriebenen Ausführungsvarianten.

Eine besonders bevorzugte Ausführungsvariante des Windenergieanlagen-Turmes sieht vor, dass dieser einen ersten Windenergieanlagen-Stahlturmabschnitt mit einer ersten Horizontalstoßseite, einen zweiten Windenergieanlagen-Stahlturmabschnitt mit einer zweiten Horizontalstoßseite und ein Horizontal-Laschenelement, das an einem Horizontalstoß angeordnet ist und mit dem ersten Windenergieanlagen-Stahlturmabschnitt und dem zweiten Windenergieanlagen-Stahlturmabschnitt verbunden ist, umfasst, wobei der erste Windenergieanlagen-Stahlturmabschnitt mit der ersten Horizontalstoßseite und der zweite Windenergieanlagen-Stahlturmabschnitt mit der zweiten Horizontalstoßseite an dem Horizontalstoß aneinander angeordnet sind. Ferner ist es bevorzugt, dass das Horizontal-Laschenelement ein auskragendes Horizontal-Anschlusselement zur Anordnung von Funktionselementen aufweist. Insbesondere ist es bevorzugt, dass das Horizontal-Anschlusselement analog zu dem Anschlusselement des Windenergieanlagen-Stahlturmabschnitts ausgebildet ist. Mit dem Horizontal-Laschenelement werden vorzugsweise zwei oder mehr vertikal benachbarter Windenergieanlagen-Stahlturmringsegmente miteinander verbunden. Insbesondere bei versetzter Anordnung der Windenergieanlagen-Stahlturmringsegmente kann beispielsweise ein Windenergieanlagen-Stahlturmringsegment eines ersten Windenergieanlagen-Stahlturmabschnitts mit zwei oder mehr Windenergieanlagen-Stahlturmringsegmenten eines zweiten, benachbart zum ersten Windenergieanlagen-Stahlturmabschnitts angeordneten Windenergieanlagen-Stahlturmabschnitts verbunden werden. Insbesondere ist es bevorzugt, dass sich die Horizontal-Laschenelemente in Umfangsrichtung erstrecken.

Die Verbindung zweier vertikal benachbarter Windenergieanlagen-Stahlturmabschnitte erfolgt vorzugsweise ein-, zwei- und/oder mehrschnittig. Die einschnittige Verbindung bedeutet insbesondere, dass genau ein Horizontal-Laschenelement an einem Horizontalstoß angeordnet ist. Bei der zweischnittigen Verbindung sind genau zwei Horizontal-Laschenelemente an einem Horizontalstoß angeordnet. Ferner können auch mehrere Horizontal-Laschenelemente an einem Horizontalstoß angeordnet werden, wobei es besonders bevorzugt ist, dass sich jeweils ein Horizontal-Laschenelement im Wesentlichen zwischen zwei Laschenelementen erstreckt. Die Horizontal-Laschenelemente weisen vorzugsweise eine Erstreckung von weniger als 15 Metern, insbesondere weniger als 13 Metern, auf, um den Logistikvorgaben eines Standardtransports gerecht zu werden.

Gemäß einem weiteren Aspekt wird die eingangs genannte Aufgabe gelöst durch einen Windenergieanlagen-Turm, umfassend mindestens einen zuvor beschriebenen Windenergieanlagen-Stahlturmabschnitt, und mindestens ein Mantel-Stahlturmringsegment mit einem Mantelsegment mit einer Erstreckung in Richtung einer Mantelsegmenthöhe, einer Mantelsegment-Ringrichtung und einer Mantelsegmentdicke mit einer ersten Mantel-Horizontalstoßseite und einer zweiten Mantel-Horizontalstoßseite, einer ersten Mantel-Vertikalstoßseite und einer zweiten Mantel-Vertikalstoßseite, wobei an der ersten Mantel-Vertikalstoßseite ein erster Mantel-Vertikalflansch angeordnet ist und/oder an der zweiten Mantel-Vertikalstoßseite ein zweiter Mantel-Vertikalflansch angeordnet ist, wobei der erste Mantel-Vertikalflansch und/oder der zweite Mantel-Vertikalflansch einen Winkel mit dem Mantelsegment einschließt bzw. einschließen, wobei an dem ersten Mantel-Vertikalflansch und/oder an dem zweiten Mantel-Vertikalflansch mindestens ein Anschlusselement zur Anordnung von Funktionselementen ausgebildet ist, wobei das Anschlusselement ausgehend von dem ersten Mantel-Vertikalflansch und/oder dem zweiten Mantel-Vertikalflansch auskragt, und wobei vorzugsweise das mindestens eine Mantelsegment einer Turmspitze Windenergieanlagen-Turms zugewandt und der mindestens eine Windenergieanlagen-Stahlturmabschnitt der Turmspitze abgewandt angeordnet sind.

Das Mantel-Stahlturmringsegment entspricht in seinen Ausgestaltungen und Details vorzugsweise dem in der deutschen Patentanmeldung "Windenergieanlagen-Stahlturmringsegment und Verfahren" derselben Anmelderin vom 26. Juli 2017 beschriebenen Stahlturmringsegment.

Der Windenergieanlagen-Turm mit mindestens einem zuvor beschriebenen Windenergieanlagen-Stahlturmabschnitt und mindestens einem Mantel-Stahlturmringsegment ermöglicht es, die Vorteile der beiden Ausgestaltungen miteinander zu kombinieren. Insbesondere in den Bereichen, in denen der Windenergieanlagen-Turm besonders hohen Belastungen ausgesetzt ist, was in der Regel im unteren Bereich der Fall ist, ist es bevorzugt, einen zuvor beschriebenen Stahlturmabschnitt einzusetzen. Insbesondere in den Bereichen, in denen der Windenergieanlagen-Turm niedrigeren Belastungen ausgesetzt ist, was in der Regel im oberen Bereich der Fall ist, ist es bevorzugt, ein Mantel-Stahlturmringsegment einzusetzen.

Insbesondere ist es bevorzugt, dass der Windenergieanlagen-Turm neben dem mindestens einen zuvor beschriebenen Windenergieanlagen-Stahlturmabschnitt einen Windenergieanlagen-Turmabschnitt aufweist, der mindestens ein erstes Mantel-Stahlturmringsegment und ein zweites Mantel-Stahlturmringsegment umfasst, wobei das erste Mantel-Stahlturmringsegment und das zweite Mantel-Stahlturmringsegment an mindestens einem im Wesentlichen vertikalen Stoß mit Vertikalflanschen aneinanderstoßen, und wobei das erste Mantel-Stahlturmringsegment und das zweite Mantel-Stahlturmringsegment an dem mindestens einen im Wesentlichen vertikalen Stoß miteinander verbunden sind.

Die eingangs genannte Aufgabe wird darüber hinaus gelöst durch eine Windenergieanlage, umfassend einen Windenergieanlagen-Turm nach dem vorherigen Aspekt.

Ferner wird die eingangs genannte Aufgabe gelöst durch ein Verfahren zur Herstellung eines Windenergieanlagen-Stahlturmabschnitts, insbesondere eines Windenergieanlagen-Stahlturmabschnitts nach mindestens einer der im Vorherigen beschriebenen Ausführungsvarianten, umfassend Bereitstellen eines ersten Windenergieanlagen-Stahlturmringsegments mit einer ersten Vertikalstoßseite, eines zweiten Windenergieanlagen-Stahlturmringsegments mit einer zweiten Vertikalstoßseite und eines Laschenelements, Anordnen des ersten Windenergieanlagen-Stahlturmringsegments und des zweiten Windenergieanlagen-Stahlturmringsegments an einem vertikalen Stoß mit der ersten Vertikalstoßseite und der zweiten Vertikalstoßseite, Anordnen des Laschenelements an dem vertikalen Stoß, Verbinden des Laschenelements mit dem ersten Windenergieanlagen-Stahlturmringsegment und dem zweiten Windenergieanlagen-Stahlturmringsegment.

Ferner ist es bevorzugt, dass das Verfahren ein Verbinden des Laschenelements an dem ersten Windenergieanlagen-Stahlturmringsegment und an dem zweiten Windenergieanlagen-Stahlturmringsegment mittels Befestigungselementen, insbesondere Schrauben, umfasst.

Das erfindungsgemäße Verfahren und seine möglichen Fortbildungen weisen Merkmale bzw. Verfahrensschritte auf, die sie insbesondere dafür geeignet machen, für einen erfindungsgemäßen Windenergieanlagen-Stahlturmabschnitt und seine Fortbildungen verwendet zu werden. Für weitere Vorteile, Ausführungsvarianten und Ausführungsdetails dieser weiteren Aspekte und ihrer möglichen Fortbildungen wird auch auf die zuvor erfolgte Beschreibung zu den entsprechenden Merkmalen und Fortbildungen des Windenergieanlagen-Stahlturmabschnitts verwiesen.

Bevorzugte Ausführungsformen der Erfindung werden beispielhaft anhand der beiliegenden Figuren erläutert. Es zeigen:
- Figur 1:: eine schematische, dreidimensionale Ansicht einer beispielhaften Ausführungsform einer Windenergieanlage;
- Figur 2:: eine schematische, zweidimensionale Ansicht einer beispielhaften Ausführungsform eines Windenergieanlagen-Stahlturmabschnitts;
- Figur 3:: eine schematische, zweidimensionale Ansicht einer weiteren beispielhaften Ausführungsform eines Windenergieanlagen-Stahlturmabschnitts;
- Figur 4:: eine schematische, zweidimensionale Ansicht einer weiteren beispielhaften Ausführungsform eines Windenergieanlagen-Stahlturmabschnitts;
- Figur 5:: eine schematische, zweidimensionale Ansicht einer beispielhaften Ausführungsform eines Laschenelementes;
- Figur 6:: eine schematische, dreidimensionale Teilansicht einer beispielhaften Ausführungsform eines Windenergieanlagen-Stahlturmabschnitts;
- Figur 7:: eine schematische, dreidimensionale Teilansicht einer weiteren beispielhaften Ausführungsform eines Windenergieanlagen-Stahlturmabschnitts;
- Figur 8:: eine schematische, dreidimensionale Ansicht einer beispielhaften Ausführungsform eines Windenergieanlagen-Turmes;
- Figur 9:: eine schematische, zweidimensionale Teilansicht einer beispielhaften Ausführungsform eines weiteren Windenergieanlagen-Turmes.

In den Figuren sind gleiche, oder im Wesentlichen funktionsgleiche bzw. -ähnliche Elemente mit den gleichen Bezugszeichen bezeichnet.

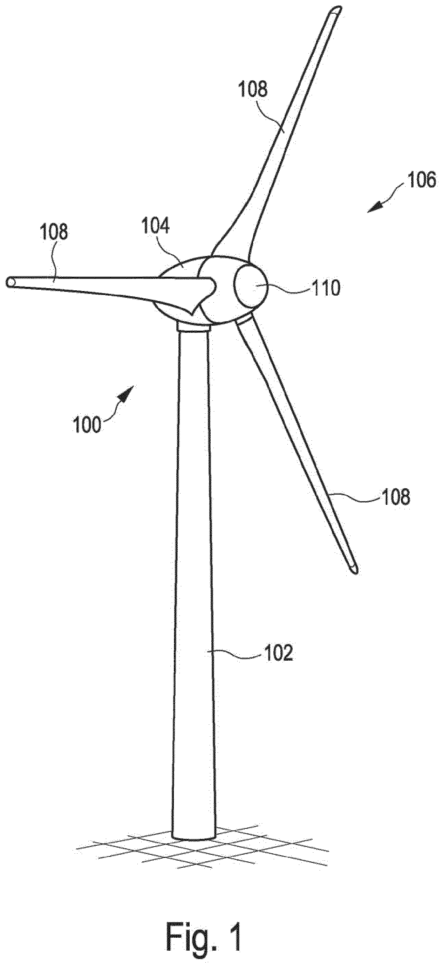

Figur 1 zeigt eine schematische, dreidimensionale Ansicht einer beispielhaften Ausführungsform einer Windenergieanlage. Figur 1 zeigt insbesondere eine Windenergieanlage 100 mit einem Turm 102 und einer Gondel 104. An der Gondel 104 ist ein Rotor 106 mit drei Rotorblättern 108 und einem Spinner 110 angeordnet. Der Rotor 106 wird im Betrieb durch den Wind in eine Drehbewegung versetzt und treibt dadurch einen nicht gezeigten Generator an der Gondel 104 an. Der Turm 102 umfasst insbesondere eine Mehrzahl an Windenergieanlagen-Stahlturmabschnitten mit einem ersten Windenergieanlagen-Stahlturmringsegment mit einer ersten Vertikalstoßseite und einem zweiten Windenergieanlagen-Stahlturmringsegment mit einer zweiten Vertikalstoßseite, wobei diese an einem vertikalen Stoß aneinander angeordnet sind und mit einem Laschenelement verbunden sind.

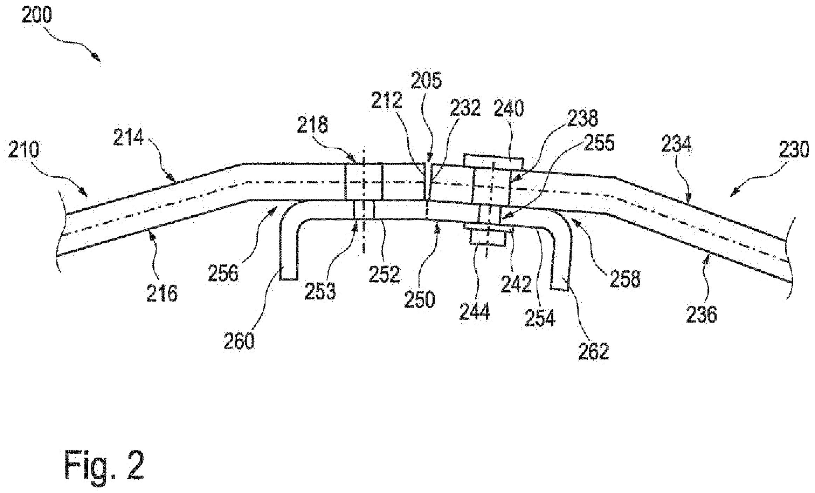

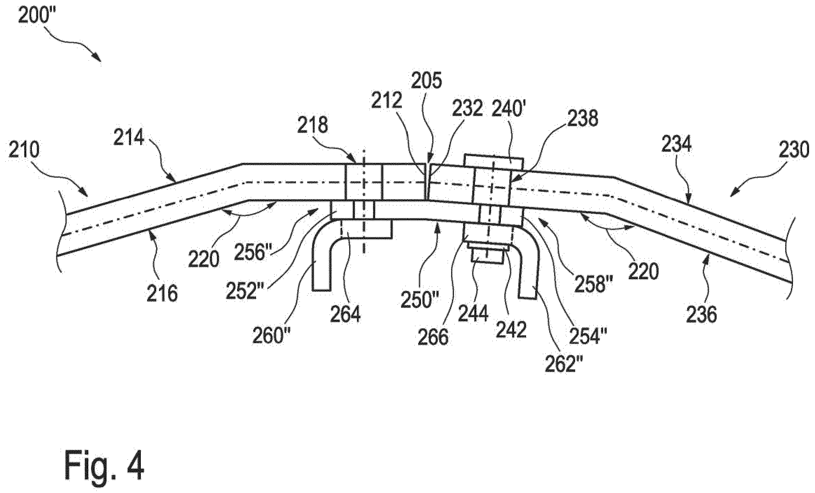

In den Figuren 2 bis 4 sind Stahlturmabschnitte 200, 200', 200" gezeigt, welche sich insbesondere in Bezug auf die Ausbildung des Laschenelementes 250, 250`, 250" unterscheiden. Die Stahlturmabschnitte 200, 200`, 200" weisen ein erstes Stahlturmringsegment 210 und ein zweites Stahlturmringsegment 230 auf. Das erste Stahlturmringsegment 210 ist mit seiner ersten Vertikalstoßseite 212 an der zweiten Vertikalstoßseite 232 des zweiten Stahlturmringsegments 230 an einem Stoß 205 angeordnet. Das erste Stahlturmringsegment 210 und das zweite Stahlturmringsegment 230 weisen jeweils einen teilringförmigen Querschnitt auf, wobei eine Flächennormale dieses Querschnitts im Wesentlichen parallel zur Segmenthöhe, hier orthogonal zur Zeichenebene, ausgerichtet ist, wobei der teilringförmige Querschnitt durch mehrere gerade Abschnitte ausgebildet wird, wobei die geraden Abschnitte einen Abkantwinkel 220 einschließen. Das erste Stahlturmringsegment 210 weist eine Außenumfangsfläche 214 und einen Innenumfangsfläche 216 auf. Analog hierzu weist das zweite Stahlturmringsegment 230 eine Außenumfangsfläche 234 und eine Innenumfangsfläche 236 auf. In Figur 4 ist ferner der Abkantwinkel 220 zwischen zwei geraden Abschnitten des ersten Stahlturmringsegments 210 gezeigt. Der Abkantwinkel 220 beträgt vorzugsweise 175°. Die geraden Abschnitte der Stahlturmringsegmente, die an die Vertikalstoßseiten 212, 232 angrenzen, schließen den Segmentwinkel ein, der vorzugsweise ebenfalls 175° beträgt.

Das erste Stahlturmringsegment 210 weist in einem Abschnitt angrenzend an die erste Vertikalstoßseite 212 Befestigungsöffnungen 218 auf, deren Durchtrittsrichtung im Wesentlichen radial ausgerichtet ist. Analog hierzu weist das zweite Stahlturmringsegment 230 eine Befestigungsöffnung 238 auf.

Um das erste Stahlturmringsegment 210 und das zweite Stahlturmringsegment 230 miteinander zu verbinden, ist das in Figur 2 gezeigte Laschenelement 250 angeordnet. Das Laschenelement 250 weist einen ersten Laschenabschnitt 252 auf, der im Wesentlichen an dem ersten Stahlturmringsegment 210 angeordnet ist. Ferner weist das Laschenelement 250 einen zweiten Laschenabschnitt 254 auf, der im Wesentlichen an dem zweiten Stahlturmringsegment 230 angeordnet ist. Die gestrichelte Linie zwischen dem ersten Laschenabschnitt und dem zweiten Laschenabschnitt 252, 254 ist lediglich zur Kenntlichmachung dieser zwei Abschnitte dargestellt. Das dargestellte Laschenelement 250 ist als ein integrales Bauteil ausgebildet.

An dem ersten Laschenabschnitt 252 sind ferner Befestigungsöffnungen 253 und an dem zweiten Laschenabschnitt 254 Befestigungsöffnungen 255 angeordnet, welche korrespondierend zu den Befestigungsöffnungen 218, 238 der Stahlturmringsegmente 210, 230 ausgebildet sind. Das Laschenelement 250 ist mit dem ersten Stahlturmringsegment 210 und dem zweiten Stahlturmringsegment 230 mittels einer Schraubverbindung verbunden, welche exemplarisch für die Verbindung des Laschenelements 250 mit dem zweiten Stahlturmringsegment 230 gezeigt ist. Eine Schraube 240 ist hierfür von der Außenumfangsfläche 234 durch die Befestigungsöffnung 238 des zweiten Stahlturmringsegment 230 und die Befestigungsöffnung 255 des Laschenelements 250 geführt und mittels einer Unterlegscheibe 242 und einer Mutter 244 gesichert.

In horizontaler Richtung bzw. in Umfangsrichtung des Stahlturmabschnitts 200, 200', 200" erstreckt sich das Laschenelement 250 von einem ersten Vertikalende 256 zu einem zweiten Vertikalende 258. An dem ersten Vertikalende 256 ist ferner eine erstes Anschlusselement 260 und an dem zweiten Vertikalende 258 ein zweites Anschlusselement 262 angeordnet. Die Anschlusselemente 260, 262 kragen von dem Laschenelement 250 aus und schließen jeweils einen Anschlusswinkel mit dem Laschenelement ein. Dieser Anschlusswinkel beträgt vorliegend in etwa 90°. Ferner kragen die Anschlusselemente in eine Anschlussrichtung aus, welche im Wesentlichen radial ausgerichtet ist.

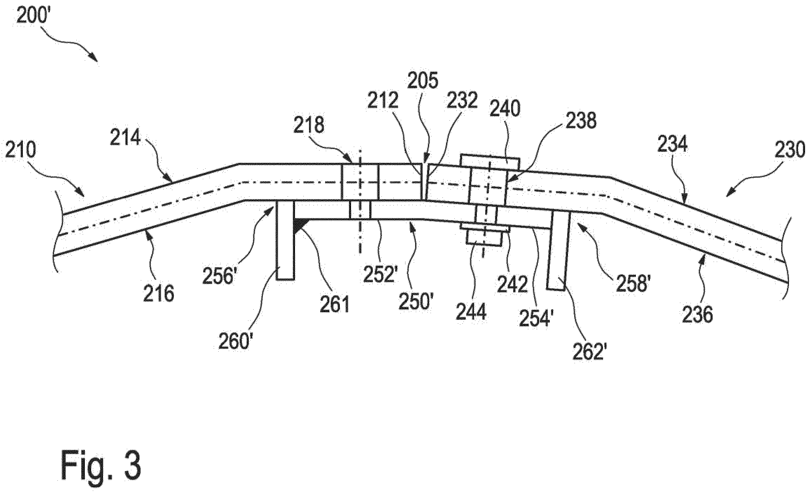

Das in Figur 3 gezeigte Laschenelement 250` erstreckt sich ebenfalls von einem ersten Vertikalende 256' zu einem zweiten Vertikalende 258`, wobei an den Vertikalenden 256', 258' jeweils Anschlusselemente 260', 262` angeordnet sind. Die Anschlusselemente 260', 262` sind an dem Laschenelement 250` mittels einer Schweißverbindung angeordnet. Die Anschlusselemente 260', 262` sind somit zunächst als separate Bauelemente ausgebildet, die an dem Laschenelement 250' angeordnet und mit diesem verbunden werden. Vorliegend sind die Anschlusselemente 260', 262` angeschweißt, was schematisch mittels der Schweißnaht 261 dargestellt ist.

Das in Figur 4 gezeigte Laschenelement 250" erstreckt sich ebenfalls von einem ersten Vertikalende 256" zu einem zweiten Vertikalende 258", wobei an diesen Enden bzw. an Abschnitten angrenzend an diese Vertikalenden Anschlusselemente 260", 262" angeordnet sind. Die Anschlusselemente 260", 262" weisen Befestigungsabschnitte 264, 266 auf, mit denen die Anschlusselemente 260", 262" integral verbunden sind. Die Befestigungsabschnitte 264, 266 sind im Wesentlichen flächenparallel zu dem Laschenelement 250" angeordnet und im 90°-Winkel abgekantet zu den Anschlusselementen 260", 262" angeordnet. Die Befestigungsabschnitte 264, 266 weisen ferner Durchtrittsöffnungen auf, die korrespondierend zu den Befestigungsöffnungen 253, 255 des Laschenelements 250" und den Befestigungsöffnungen 218, 238 des ersten Stahlturmringsegments 210 und des zweiten Stahlturmringsegments 230 angeordnet sind, um mit einer Schraube 240' die Komponenten miteinander zu verbinden.

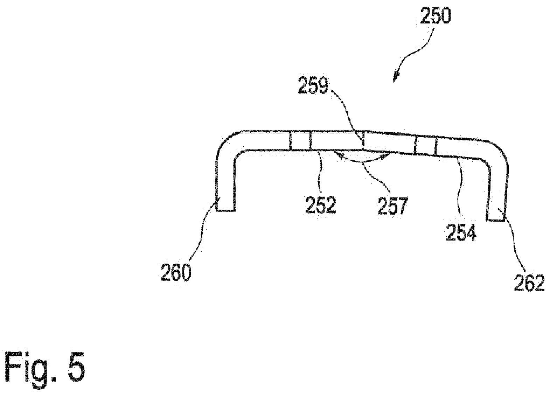

In Figur 5 ist das Laschenelement 250 aus Figur 2 im Detail abgebildet. Insbesondere ist der Laschenwinkel 257 zwischen dem ersten Laschenabschnitt 252 und dem zweiten Laschenabschnitt 254 erkennbar. Der Laschenwinkel 257 beträgt vorzugsweise ebenfalls 5°. Insbesondere ist es bevorzugt, dass der Segmentwinkel zwischen zwei benachbart angeordneten Stahlturmringsegmenten 210, 230 und der Laschenwinkel 257 gleich groß ist. Auf der gegenüberliegenden Seite von der Seite auf der der Laschenwinkel 257 eingeschlossen wird, wird ein Scheitelpunkt 259 ausgebildet, der am Stoß 205 angeordnet wird.

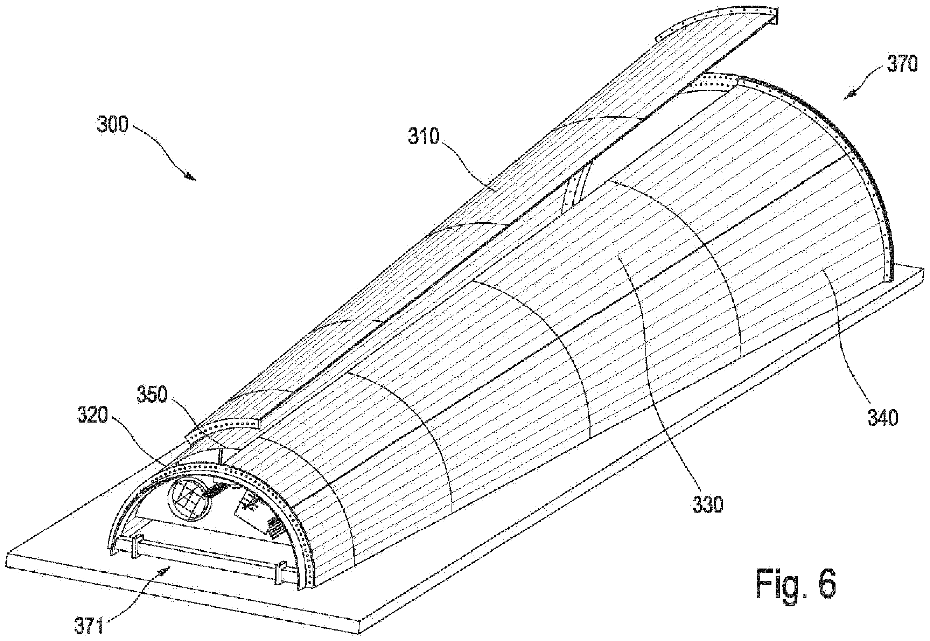

Figur 6 zeigt eine schematische, dreidimensionale Teilansicht einer beispielhaften Ausführungsform eines Windenergieanlagen-Stahlturmabschnitts. Der Stahlturmabschnitt 300 weist ein erstes Stahlturmringsegment 310, ein zweites Stahlturmringsegment 320, ein drittes Stahlturmringsegment 330 und ein viertes Stahlturmringsegment 340 auf. In Längsrichtung erstreckt sich der Stahlturmabschnitt mit einer Segmenterstreckung von eine unteren Horizontalstoßseite 370 zu einer oberen Horizontalstoßseite 371. Die Stahlturmringsegmente 310, 320, 330, 340 sind jeweils mittels eines Laschenelements 350 miteinander verbunden.

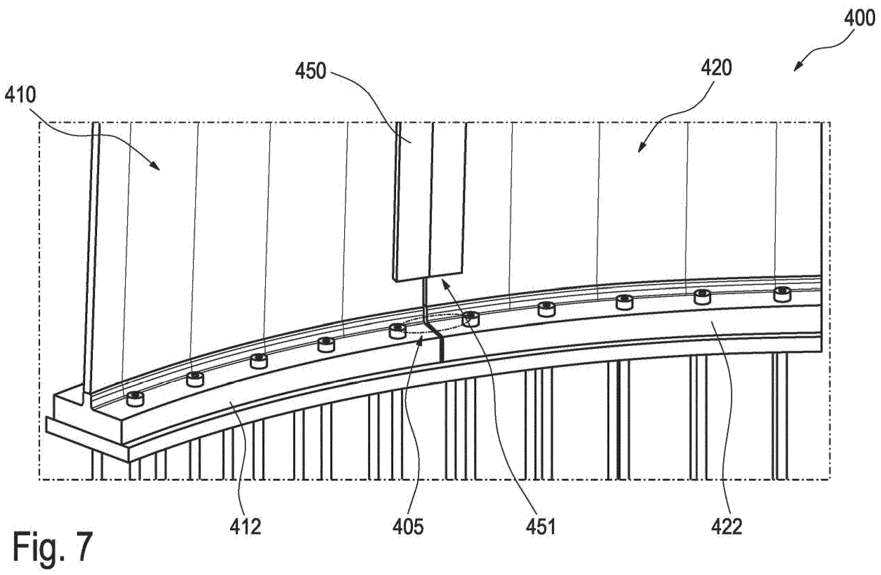

Figur 7 zeigt eine schematische, dreidimensionale Teilansicht einer weiteren beispielhaften Ausführungsform eines Windenergieanlagen-Stahlturmabschnitts 400, wobei die Anschlusselemente in einem Abschnitt des Laschenelements 450 angeordnet sind, der nicht abgebildet ist. Das erste Stahlturmringsegment 410 und das zweite Stahlturmringsegment 420 sind an einem vertikalen Stoß 405 aneinander angeordnet und mittels des Laschenelementes 450 miteinander verbunden. Die untere Horizontalstoßseite des ersten Stahlturmringsegments 410 ist mittels eines ersten Vertikalflansches 412 und die untere Horizontalstoßseite des zweiten Stahlturmringsegments 420 ist durch einen zweiten Vertikalflansch 422 ausgebildet.

Es ist zu erkennen, dass das untere Horizontalende 451 des Laschenelementes 450 beabstandet von den unteren Horizontalstoßseiten der Stahlturmringsegmente 410, 420 angeordnet ist. Ein Spalt zwischen dem ersten Stahlturmringsegment 410 und dem zweiten Stahlturmringsegment 420 sowie zwischen dem ersten Vertikalflansch 412 und dem zweiten Vertikalflansch 422 ist vorzugsweise abgedichtet. Insbesondere ist es bevorzugt, dass in vertikaler Richtung unter dem Laschenelement 450 an den zwei Stahlturmringsegmenten 410, 420 eine elastische, insbesondere eine flexible, Abdichtung angebracht ist. Diese Abdichtung kann als Verlängerung des Laschenelements 450 erachtet werden. Vorzugsweise erstreckt sich diese Abdichtung von dem Laschenelement 450 bis einschließlich zu den Vertikalflanschen 412, 422. Die Abdichtung ist vorteilhaft derart angeordnet, dass diese den Spalt bedeckt. Die Abdichtung kann als Gummiabdichtung ausgebildet sein, wobei eine Dicke von 3 bis 4 mm besonders bevorzugt ist. Ferner ist es bevorzugt, dass die Abdichtung in dem oben erläuterten Abschnitt aufgeklebt, insbesondere einseitig aufgeklebt, wird.

Durch die Ausgestaltung gemäß Figur 7 werden ferner Löcher in Schweißnähten vermieden und ferner erfolgt keine Laschenunterbrechung an Schweißnähten. Auch hier sind nicht gezeigte Befestigungsöffnungen vorgesehen, die in einem oberen Laschenendabschnitt und/oder einem unteren Laschenendabschnitt einen möglichst geringen Abstand aufweisen, wobei je Laschenendabschnitt insbesondere vier Befestigungsöffnungen vorgesehen sind.

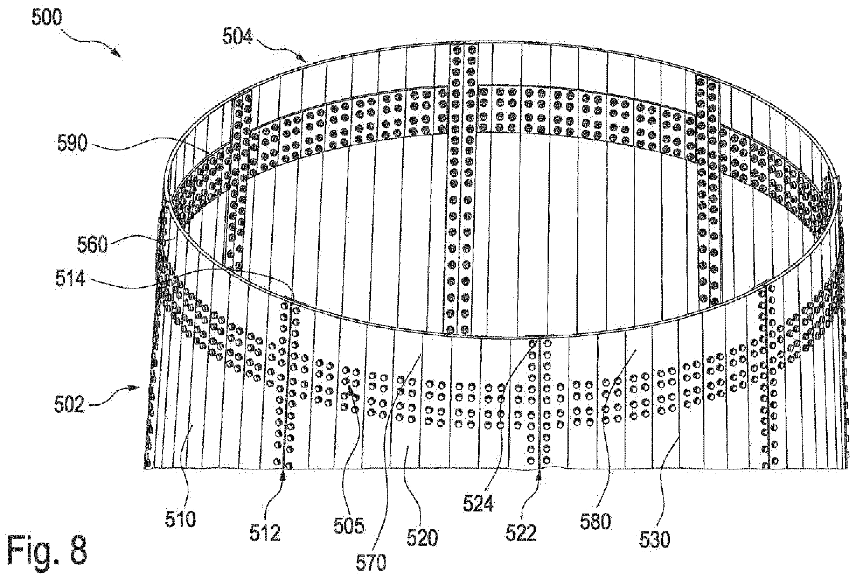

Figur 8 zeigt eine schematische, dreidimensionale Ansicht einer beispielhaften Ausführungsform eines Windenergieanlagen-Turmes. Der Turm 500 weist einen ersten Windenergieanlagen-Stahlturmabschnitt 502 mit insgesamt acht horizontal benachbarten Stahlturmringsegmenten auf, insbesondere mit einem ersten Stahlturmringsegment 510, einem zweiten Stahlturmringsegment 520 und einem dritten Stahlturmringsegment 530. Das erste Stahlturmringsegment 510 ist an einem vertikalen Stoß 512 an dem zweiten Stahlturmringsegment 520 angeordnet. An der Innenumfangsfläche des ersten und zweiten Stahlturmringsegments 510, 520 ist ein nicht gezeigtes Laschenelement angeordnet, welches mittels Schrauben, von denen hier lediglich die Schraubenköpfe ersichtlich sind, mit den Stahlturmringsegmenten 510, 520 verbunden ist. Das zweite Stahlturmringsegment 520 und das dritte Stahlturmringsegment 530 sind an einem weiteren vertikalen Stoß 522 aneinander angeordnet und mittels eines nicht gezeigten Laschenelements an der Innenumfangsfläche des Turms 500 verbunden.

Vertikal oberhalb benachbart zu dem ersten Windenergieanlagen-Stahlturmabschnitt 502 ist ein zweiter Windenergieanlagen-Stahlturmabschnitt 504 angeordnet, der ebenfalls acht horizontal benachbarte Stahlturmringsegmente aufweist, insbesondere ein viertes Stahlturmringsegment 560, ein fünftes Stahlturmringsegment 570 und ein sechstes Stahlturmringsegment 580. Das vierte Stahlturmringsegment 560 und das fünfte Stahlturmringsegment 570 sind mit einem Laschenelement 514 miteinander verbunden. Ferner sind das fünfte Stahlturmringsegment 570 und das sechste Stahlturmringsegment 580 mit einem Laschenelement 524 miteinander verbunden. Die Anschlusselemente sind in dieser schematischen Zeichnung nicht dargestellt.

Ferner ist gezeigt, dass die vertikal benachbarten Windenergieanlagen-Stahlturmabschnitte 502, 504 jeweils eine Horizontalstoßseite aufweisen mit denen die Windenergieanlagen-Stahlturmabschnitt 502, 504 an einem Horizontalstoß 505 aneinander stoßen. Zur Verbindung der Windenergieanlagen-Stahlturmabschnitte 502, 504 sind acht Horizontal-Laschenelemente, beispielsweise das Horizontal-Laschenelemente 590, an dem Horizontalstoß angeordnet und mit dem ersten Windenergieanlagen-Stahlturmabschnitt 502 und dem zweiten Windenergieanlagen-Stahlturmabschnitt 504 verbunden. Das Horizontal-Laschenelement 590 kann sich ringförmig oder teilringförmig in Umfangsrichtung erstrecken. Insbesondere ist es bevorzugt, dass sich das Horizontal-Laschenelement 590 in Umfangsrichtung zwischen zwei Laschenelementen 514, 524 erstreckt. Ferner können insgesamt acht Horizontal-Laschenelemente jeweils zwischen zwei der acht Laschenelemente angeordnet sein.

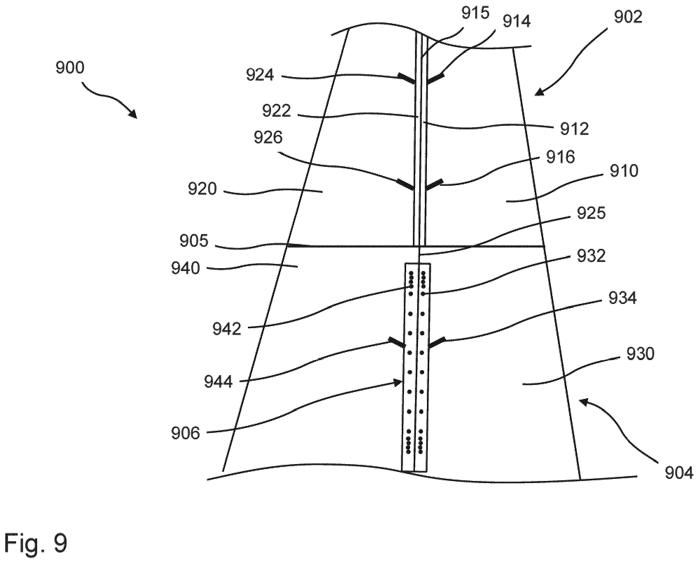

Figur 9 zeigt eine schematische, zweidimensionale Teilansicht einer beispielhaften Ausführungsform eines weiteren Windenergieanlagen-Turmes. Der Turm 900 umfasst einen oberen Turmabschnitt 902, der einer Turmspitze des Turmes 900 zugewandt ist, und einen unteren Turmabschnitt 904, der der Turmspitze des Turmes 900 abgewandt ist. Der obere Turmabschnitt 902 und der untere Turmabschnitt 904 stoßen an einem Horizontalstoß 905 aneinander und sind im Bereich des Horizontalstoßes 905 miteinander verbunden.

Der obere Turmabschnitt 902 insbesondere als Windenergieanlagen-Turmabschnitt mit einem ersten und einem zweiten Mantel-Stahlturmringsegment ausgebildet. Die ersten und zweiten Mantel-Stahlturmringsemente werden im folgenden kurz als erste und zweite Stahlturmringsemente bezeichnet. Das erste Stahlturmringsegment 910 hat eine erste Vertikalstoßseite und das zweite Stahlturmringsegment 920 eine zweite Vertikalstoßseite. Das erste Stahlturmringsegment 910 und das zweite Stahlturmringsegment 920 sind horizontal benachbart zueinander angeordnet. Das erste Stahlturmringsegment 910 und das zweite Stahlturmringsegment 920 stoßen mit ihren Vertikalstoßseiten an einem oberen Vertikalstoß 915 aneinander.

An dem ersten Stahlturmringsegment 910 ist an der ersten Vertikalstoßseite ein erster Vertikalflansch 912 angeordnet. Analog ist an dem zweiten Stahlturmringsegment 920 an der zweiten Vertikalstoßseite ein zweiter Vertikalflansch 922 angeordnet. Die Vertikalflansche 912, 922 schließen jeweils einen Winkel mit den wandausbildenden Abschnitten der Stahlturmringsegmente 910, 920 ein. An den Vertikalflanschen 912, 922 sind nicht gezeigte, horizontal ausgerichtete Durchtrittsöffnungen angeordnet. Die Durchtrittsöffnungen sind insbesondere derart angeordnet und ausgebildet, dass die Vertikalflansche 912, 922 mittels Befestigungselemente miteinander verbindbar sind. Durch eine Verbindung der Vertikalflansche 912, 922 miteinander erfolgt auch eine Verbindung der Stahlturmringsegmente 910, 920 miteinander.

An dem ersten Vertikalflansch 912 sind ein erstes Anschlusselement 914 und ein zweites Anschlusselement 916 ausgebildet, die ausgehend von dem ersten Vertikalflansch 912 auskragen. Die Anschlusselemente 914, 916 sowie auch alle weiteren im Folgenden beschriebenen Anschlusselemente sind insbesondere zur Anordnung von Funktionselementen angeordnet und ausgebildet. An dem zweiten Vertikalflansch 922 sind ebenfalls zwei Anschlusselemente 924, 926 ausgebildet, die vom zweiten Vertikalflansch 922 auskragen.

Der untere Turmabschnitt 904 umfasst ein drittes Stahlturmringsegment 930 und ein viertes Stahlturmringsegment 940. Das dritte Stahlturmringsegment 930 und das vierte Stahlturmringsegment 940 stoßen an einem unteren Vertikalstoß 925 jeweils mit ihren Vertikalstoßseiten aneinander. An dem unteren Vertikalstoß 925 ist ein Laschenelement 906 angeordnet, welches mit dem dritten Stahlturmringsegment 930 und dem vierten Stahlturmringsegment 940 verbunden ist. Die Verbindung ist insbesondere mit Befestigungselementen 932, 942 realisiert, wobei die vertikale Beabstandung der Befestigungselemente in einem Mittenabschnitt des Laschenelements 906 größer ist als in den zwei Endabschnitten des Laschenelements 906. In den Endabschnitten des Laschenelements 906 ist die vertikale Beabstandung der Befestigungselemente vielmehr so gering wie möglich gewählt. Das dritte Stahlturmringsegment 930 und das vierte Stahlturmringsegment 940 werden somit am unteren Vertikalstoß 925 durch das Laschenelement 906 miteinander verbunden und zusammengehalten. Der untere Turmabschnitt 904 weist ebenfalls Anschlusselemente 934, 944 auf, wobei das Laschenelement 906 die Anschlusselemente 934, 944 aufweist. Die Anschlusselemente 934, 944 kragen von dem Laschenelement 906 aus.

Das Laschenelement 250, 250', 250", 350, 450, 514, 524 mit einem auskragenden Anschlusselement 260, 260', 260", 262, 262', 262" hat den besonderen Vorteil einer besonders kostengünstigen Verbindung zweier Stahlturmringsegmente 210, 230, 310, 320, 410, 420, 510, 520, 530, wobei darüber hinaus besonders vorteilhaft Funktionselemente im Inneren des Turms 102, 500 aber auch an der Außenseite des Turms 102, 500 angeordnet werden können, ohne dass in die tragende Struktur, insbesondere die Mantelelemente der Stahlturmringsegmente 210, 230, 310, 320, 410, 420, 510, 520, 530, geschweißt werden muss. Dadurch sind die Stahlturmringsegmente 210, 230, 310, 320, 410, 420, 510, 520, 530 besonders einfach auf einer Baustelle miteinander verbindbar, da diese keine oder verminderte Verzüge aufweisen. Darüber hinaus befindet sich der Turm 102, 500 in einem vorbestimmten Spannungszustand, ohne dass kaum vorhersehbare Spannungszustände durch Schweißen vorhanden sind.

### BEZUGSZEICHEN

- 100: Windenergieanlage
- 102,500: Turm
- 104: Gondel
- 106: Rotor
- 108: Rotorblätter
- 110: Spinner
- 200, 200', 200", 300, 400, 502, 504: Stahlturmabschnitt
- 205, 405, 512, 522: Stoß
- 210, 310, 410, 510: erstes Stahlturmringsegment
- 212: erste Vertikalstoßseite
- 214,234: Außenumfangsfläche
- 216,236: Innenumfangsfläche
- 218, 238, 253, 255: Befestigungsöffnung
- 220: Abkantwinkel
- 230, 320, 420, 520: zweites Stahlturmringsegment
- 232: zweite Vertikalstoßseite
- 240, 240': Schraube
- 242: Unterlegscheibe
- 244: Mutter
- 250, 250', 250", 350, 450, 514, 524: Laschenelement
- 252, 252', 252": erster Laschenabschnitt
- 254, 254', 254": zweiter Laschenabschnitt
- 256, 256', 256": erstes Vertikalende
- 257: Laschenwinkel
- 258, 258', 258": zweites Vertikalende
- 259: Scheitelpunkt
- 260, 260', 260": erstes Anschlusselement
- 261: Schweißnaht
- 262, 262', 262": zweites Anschlusselement
- 264,266: Befestigungsabschnitt
- 330, 340, 530, 560, 570, 580: Stahlturmringsegment
- 370: untere Horizontalstoßseite
- 371: obere Horizontalstoßseite
- 412, 422: Vertikalflansch
- 451: unteres Horizontalende
- 505: Horizontal-Stoß
- 590: Horizontal-Laschenelement
- 900: Turm
- 902: oberer Turmabschnitt
- 904: unterer Turmabschnitt
- 905: Horizontalstoß
- 906: Laschenelement
- 910: erstes Stahlturmringsegment
- 912: erster Vertikalflansch
- 914: erstes Anschlusselement
- 915: oberer Vertikalstoß
- 916: zweites Anschlusselement
- 920: zweites Stahlturmringsegment
- 922: zweiter Vertikalflansch
- 924: drittes Anschlusselement
- 925: unterer Vertikalstoß
- 926: viertes Anschlusselement
- 930: drittes Stahlturmringsegment
- 932: Befestigungselement
- 934: fünftes Anschlusselement
- 940: viertes Stahlturmringsegment
- 942: Befestigungselement
- 944: sechstes Anschlusselement

## Patentansprüche

1. Windenergieanlagen-Stahlturmabschnitt (200, 200', 200", 300, 400) für einen Windenergieanlagen-Turm (102, 500), umfassend
- ein erstes Windenergieanlagen-Stahlturmringsegment (210, 310, 410, 510) mit einer ersten Vertikalstoßseite (212),
- ein zweites Windenergieanlagen-Stahlturmringsegment (230, 320, 420, 520) mit einer zweiten Vertikalstoßseite (232),
- ein Laschenelement (250, 250', 250", 350, 450, 514, 524), das an einem Stoß (205, 405, 512, 522) angeordnet ist und mit dem ersten Windenergieanlagen-Stahlturmringsegment (210, 310, 410, 510) und dem zweiten Windenergieanlagen-Stahlturmringsegment (230, 320, 420, 520) verbunden ist,
- wobei das erste Windenergieanlagen-Stahlturmringsegment (210, 310, 410, 510) mit der ersten Vertikalstoßseite (212) und das zweite Windenergieanlagen-Stahlturmringsegment (230, 320, 420, 520) mit der zweiten Vertikalstoßseite (232) an dem Stoß (205, 405, 512, 522) aneinander angeordnet sind, und
- das Laschenelement (250, 250', 250", 350, 450, 514, 524) ein von dem Laschenelement (250, 250', 250", 350, 450, 514, 524) auskragendes Anschlusselement (260, 260', 260", 262, 262', 262") zur Anordnung von Funktionselementen aufweist,
**dadurch gekennzeichnet, dass**
- das Anschlusselement (260, 260', 260", 262, 262', 262") mit dem Laschenelement (250, 250', 250", 350, 450, 514, 524) stoffschlüssig oder mittels mindestens einem Befestigungselement (240`) verbunden ist.

2. Windenergieanlagen-Stahlturmabschnitt (200, 200', 200", 300, 400) nach dem vorherigen Anspruch, wobei
- das Laschenelement (250, 250', 250", 350, 450, 514, 524) und das Anschlusselement (260, 260', 260", 262, 262', 262") einen Anschlusswinkel (220) einschließen, und/oder
- das Anschlusselement (260, 260', 260", 262, 262', 262") in eine Auskragrichtung auskragt und die Auskragrichtung im Wesentlichen radial ausgerichtet ist.

3. Windenergieanlagen-Stahlturmabschnitt (200, 200', 200", 300, 400) nach mindestens einem der vorherigen Ansprüche, wobei
- das Anschlusselement (260, 260', 260", 262, 262', 262") einstückig mit dem Laschenelement (250, 250', 250", 350, 450, 514, 524) ausgebildet ist, und/oder
- das Anschlusselement (260, 260', 260", 262, 262', 262") mit dem Laschenelement (250, 250', 250", 350, 450, 514, 524) verbunden ist.

4. Windenergieanlagen-Stahlturmabschnitt (200, 200', 200", 300, 400) nach mindestens einem der vorherigen Ansprüche, wobei
- das Anschlusselement (260, 260', 260", 262, 262', 262") mit dem Laschenelement (250, 250', 250", 350, 450, 514, 524) durch Schweißen verbunden ist.

5. Windenergieanlagen-Stahlturmabschnitt (200, 200', 200", 300, 400) nach mindestens einem der vorherigen Ansprüche, wobei
- das Anschlusselement (260, 260', 260", 262, 262', 262") einen Befestigungsabschnitt (264, 266) aufweist, wobei
- das Anschlusselement (260, 260', 260", 262, 262', 262") mit dem Befestigungsabschnitt (264, 266) verbunden ist, und/oder
- das Anschlusselement (260", 262") einstückig mit dem Befestigungsabschnitt ausgebildet ist, und vorzugsweise als Winkelelement ausgebildet ist.

6. Windenergieanlagen-Stahlturmabschnitt (200, 200', 200", 300, 400) nach mindestens einem der vorherigen Ansprüche, wobei
- sich das Laschenelement (250, 250', 250", 350, 450, 514, 524) von einem ersten Vertikalende (256, 256', 256") zu einem zweiten Vertikalende (258, 258', 258") und von einem oberen Horizontalende zu einem unteren Horizontalende (451) erstreckt, und/oder
- ein erstes Anschlusselement (260, 260', 260") an dem ersten Vertikalende (256, 256', 256") und ein zweites Anschlusselement (262, 262', 262") an dem zweiten Vertikalende (258, 258', 258") angeordnet sind, und/oder
- vorzugsweise das erste Anschlusselement (260, 260', 260") und das zweite Anschlusselement (262, 262', 262") die gleiche Beabstandung zu einer ersten oberen Horizontalstoßseite (371) und/oder einer ersten unteren Horizontalstoßseite (370) des ersten Windenergieanlagen-Stahlturmringsegments (210, 310, 410, 510) und/oder zu einer zweiten oberen Horizontalstoßseite und/oder einer zweiten unteren Horizontalstoßseite des zweiten Windenergieanlagen-Stahlturmringsegments (230, 320, 420, 520) aufweisen.

7. Windenergieanlagen-Stahlturmabschnitt (200, 200', 200", 300, 400) nach mindestens einem der vorherigen Ansprüche, wobei das Laschenelement (250, 250', 250", 350, 450, 514, 524) auf einer Innenumfangsfläche (216, 236) und/oder einer Außenumfangsfläche (214, 234) des ersten Windenergieanlagen-Stahlturmringsegments (210, 310, 410, 510) und des zweiten Windenergieanlagen-Stahlturmringsegments (230, 320, 420, 520) angeordnet ist.

8. Windenergieanlagen-Stahlturmabschnitt (200, 200', 200", 300, 400) nach mindestens einem der vorherigen Ansprüche, wobei
- das Laschenelement (250, 250', 250", 350, 450, 514, 524) einen ersten Laschenabschnitt (252, 252', 252") aufweist, der im Wesentlichen an dem ersten Windenergieanlagen-Stahlturmringsegment (210, 310, 410, 510) angeordnet ist, und/oder einen zweiten Laschenabschnitt (254, 254', 254") aufweist, der im Wesentlichen an dem zweiten Windenergieanlagen-Stahlturmringsegment (230, 320, 420, 520) angeordnet ist,
- wobei vorzugsweise der erste Laschenabschnitt (252, 252', 252") und der zweite Laschenabschnitt (254, 254', 254") einen Laschenwinkel (257) einschließen.

9. Windenergieanlagen-Stahlturmabschnitt (200, 200', 200", 300, 400) nach mindestens einem der vorherigen Ansprüche, wobei
- das Laschenelement (250, 250', 250", 350, 450, 514, 524) mit seiner Haupterstreckungsrichtung im Wesentlichen parallel zu einer Segmenthöhe angeordnet ist und das Laschenelement (250, 250', 250", 350, 450, 514, 524) in seiner Haupterstreckungsrichtung eine Laschenerstreckung von mehr als 20%, mehr als 30%, mehr als 40%, mehr als 50%, mehr als 60%, mehr als 70%, mehr als 80%, mehr als 90% der Segmenterstreckung in Richtung der Segmenthöhe aufweist.

10. Windenergieanlagen-Stahlturmabschnitt (200, 200', 200", 300, 400) nach mindestens einem der vorherigen Ansprüche, wobei
- der erste Laschenabschnitt (252, 252', 252") an einem ersten Endabschnitt des ersten Windenergieanlagen-Stahlturmringsegments (210, 310, 410, 510) angeordnet ist, wobei der erste Endabschnitt an die erste Vertikalstoßseite (212) angrenzt, und/oder
- der zweite Laschenabschnitt (254, 254', 254") an einem zweiten Endabschnitt des zweiten Windenergieanlagen-Stahlturmringsegments (230, 320, 420, 520) angeordnet ist, wobei der zweite Endabschnitt an die zweite Vertikalstoßseite (232) angrenzt, und
- vorzugsweise der erste Endabschnitt und der zweite Endabschnitt einen Segmentwinkel einschließen.

11. Windenergieanlagen-Stahlturmabschnitt (200, 200', 200", 300, 400) nach mindestens einem der vorherigen Ansprüche, wobei
- der Segmentwinkel und der Laschenwinkel (257) im Wesentlichen gleich groß sind.

12. Windenergieanlagen-Stahlturmabschnitt (200, 200', 200", 300, 400) nach mindestens einem der vorherigen Ansprüche, wobei
- das erste Windenergieanlagen-Stahlturmringsegment (210, 310, 410, 510) und/oder das zweite Windenergieanlagen-Stahlturmringsegment (230, 320, 420, 520) und/oder das Laschenelement (250, 250', 250", 350, 450, 514, 524) Befestigungsöffnungen (218, 238, 253, 255) aufweisen, die angeordnet und ausgebildet sind, Befestigungselemente (240) aufzunehmen.

13. Windenergieanlagen-Stahlturmabschnitt (200, 200', 200", 300, 400) nach mindestens einem der vorherigen Ansprüche, wobei
- die Beabstandung der Befestigungsöffnungen (253, 255) in einem oberen Laschenendabschnitt, der dem oberen Horizontalende zugewandt ist, und/oder in einem unteren Laschenendabschnitt, der dem unteren Horizontalende zugewandt ist, geringer ist als die Beabstandung der Befestigungsöffnungen (253, 255) in einem Laschenmittenabschnitt, der zwischen dem oberen Laschenendabschnitt und dem unteren Laschenendabschnitt angeordnet ist.

14. Windenergieanlagen-Turm (102, 500), umfassend zwei oder mehrere übereinander angeordnete Windenergieanlagen-Stahlturmabschnitte (200, 200', 200", 300, 400) nach mindestens einem der vorherigen Ansprüche.

15. Windenergieanlage, umfassend einen Windenergieanlagen-Turm (102, 500) nach dem vorherigen Anspruch.

16. Verfahren zur Herstellung eines Windenergieanlagen-Stahlturmabschnitts (200, 200', 200", 300, 400) nach mindestens einem der Ansprüche 1-13, **gekennzeichnet durch**
- Bereitstellen eines ersten Windenergieanlagen-Stahlturmringsegments (210, 310, 410, 510) mit einer ersten Vertikalstoßseite (212), eines zweiten Windenergieanlagen-Stahlturmringsegments (230, 320, 420, 520) mit einer zweiten Vertikalstoßseite (232) und eines Laschenelements (250, 250', 250", 350, 450, 514, 524);
- Anordnen des ersten Windenergieanlagen-Stahlturmringsegments (210, 310, 410, 510) und des zweiten Windenergieanlagen-Stahlturmringsegments (230, 320, 420, 520) an einem Stoß (205, 405, 512, 522) mit der ersten Vertikalstoßseite (212) und der zweiten Vertikalstoßseite (232);
- Anordnen des Laschenelements (250, 250', 250", 350, 450, 514, 524) an dem Stoß (205, 405, 512, 522);
- Verbinden des Laschenelements (250, 250', 250", 350, 450, 514, 524) mit dem ersten Windenergieanlagen-Stahlturmringsegment (210, 310, 410, 510) und dem zweiten Windenergieanlagen-Stahlturmringsegment (230, 320, 420, 520).

## Claims

1. A wind turbine steel tower portion (200, 200', 200", 300, 400) for a wind turbine tower (102, 500), comprising
- a first wind turbine steel tower ring segment (210, 310, 410, 510) with a first vertical joint side (212),
- a second wind turbine steel tower ring segment (230, 320, 420, 520) with a second vertical joint side (232),
- a bracket element (250, 250', 250", 350, 450, 514, 524) which is arranged at a joint (205, 405, 512, 522) and which is connected to the first wind turbine steel tower ring segment (210, 310, 410, 510) and to the second wind turbine steel tower ring segment (230, 320, 420, 520),
- wherein the first wind turbine steel tower ring segment (210, 310, 410, 510), with the first vertical joint side (212), and the second wind turbine steel tower ring segment (230, 320, 420, 520), with the second vertical joint side (232), are arranged against one another at the joint (205, 405, 512, 522), and- the bracket element (250, 250', 250", 350, 450, 514, 524) has a connection element (260, 260', 260", 262, 262', 262") which projects from the bracket element (250, 250', 250", 350, 450, 514, 524) and which serves for the arrangement of functional elements
**characterized in that**
- the connection element (260, 260', 260", 262, 262', 262") is connected to the bracket element (250, 250', 250", 350, 450, 514, 524) cohesively or by means of at least one fastening element (240').

2. The wind turbine steel tower portion (200, 200', 200", 300, 400) as claimed in the preceding claim, wherein
- the bracket element (250, 250', 250", 350, 450, 514, 524) and the connection element (260, 260', 260", 262, 262', 262") enclose a connection angle (220), and/or
- the connection element (260, 260', 260", 262, 262', 262") projects in a projecting direction and the projecting direction is oriented substantially radially.

3. The wind turbine steel tower portion (200, 200', 200", 300, 400) as claimed in at least one of the preceding claims, wherein
- the connection element (260, 260', 260", 262, 262', 262") is formed as a single piece with the bracket element (250, 250', 250", 350, 450, 514, 524), and/or
- the connection element (260, 260', 260", 262, 262', 262") is connected to the bracket element (250, 250', 250", 350, 450, 514, 524).

4. The wind turbine steel tower portion (200, 200', 200", 300, 400) as claimed in at least one of the preceding claims, wherein
- the connection element (260, 260', 260", 262, 262', 262") is connected to the bracket element (250, 250', 250", 350, 450, 514, 524) by welding.

5. The wind turbine steel tower portion (200, 200', 200", 300, 400) as claimed in at least one of the preceding claims, wherein
- the connection element (260, 260', 260", 262, 262', 262") has a fastening portion (264, 266), wherein
- the connection element (260, 260', 260", 262, 262', 262") is connected to the fastening portion (264, 266), and/or
- the connection element (260", 262") is formed as a single piece with the fastening portion and is preferably formed as an angled element.

6. The wind turbine steel tower portion (200, 200', 200", 300, 400) as claimed in at least one of the preceding claims, wherein
- the bracket element (250, 250', 250", 350, 450, 514, 524) extends from a first vertical end (256, 256', 256") to a second vertical end (258, 258', 258") and from an upper horizontal end to a lower horizontal end (451), and/or
- a first connection element (260, 260', 260") is arranged at the first vertical end (256, 256', 256") and a second connection element (262, 262', 262") is arranged at the second vertical end (258, 258', 258"), and/or
- the first connection element (260, 260', 260") and the second connection element (262, 262', 262") preferably have the same spacing to a first upper horizontal joint side (371) and/or to a first lower horizontal joint side (370) of the first wind turbine steel tower ring segment (210, 310, 410, 510) and/or to a second upper horizontal joint side and/or to a second lower horizontal joint side of the second wind turbine steel tower ring segment (230, 320, 420, 520).

7. The wind turbine steel tower portion (200, 200', 200", 300, 400) as claimed in at least one of the preceding claims, wherein the bracket element (250, 250', 250", 350, 450, 514, 524) is arranged on an inner circumferential surface (216, 236) and/or on an outer circumferential surface (214, 234) of the first wind turbine steel tower ring segment (210, 310, 410, 510) and of the second wind turbine steel tower ring segment (230, 320, 420, 520).

8. The wind turbine steel tower portion (200, 200', 200", 300, 400) as claimed in at least one of the preceding claims, wherein
- the bracket element (250, 250', 250", 350, 450, 514, 524) has a first bracket portion (252, 252', 252"), which is arranged substantially on the first wind turbine steel tower ring segment (210, 310, 410, 510), and/or a second bracket portion (254, 254', 254"), which is arranged substantially on the second wind turbine steel tower ring segment (230, 320, 420, 520),
- wherein the first bracket portion (252, 252', 252") and the second bracket portion (254, 254', 254") preferably enclose a bracket angle (257).

9. The wind turbine steel tower portion (200, 200', 200", 300, 400) as claimed in at least one of the preceding claims, wherein
- the bracket element (250, 250', 250", 350, 450, 514, 524) is arranged with its main extent direction substantially parallel to a segment height, and the bracket element (250, 250', 250", 350, 450, 514, 524) has, in its main extent direction, a bracket extent of more than 20%, more than 30%, more than 40%, more than 50%, more than 60%, more than 70%, more than 80%, more than 90% of the segment extent in the direction of the segment height.

10. The wind turbine steel tower portion (200, 200', 200", 300, 400) as claimed in at least one of the preceding claims, wherein
- the first bracket portion (252, 252', 252") is arranged on a first end portion of the first wind turbine steel tower ring segment (210, 310, 410, 510), wherein the first end portion adjoins the first vertical joint side (212), and/or
- the second bracket portion (254, 254', 254") is arranged on a second end portion of the second wind turbine steel tower ring segment (230, 320, 420, 520), wherein the second end portion adjoins the second vertical joint side (232), and
- the first end portion and the second end portion preferably enclose a segment angle.

11. The wind turbine steel tower portion (200, 200', 200", 300, 400) as claimed in at least one of the preceding claims, wherein
- the segment angle and the bracket angle (257) are of substantially equal magnitude.

12. The wind turbine steel tower portion (200, 200', 200", 300, 400) as claimed in at least one of the preceding claims, wherein
- the first wind turbine steel tower ring segment (210, 310, 410, 510) and/or the second wind turbine steel tower ring segment (230, 320, 420, 520) and/or the bracket element (250, 250', 250", 350, 450, 514, 524) have fastening openings (218, 238, 253, 255) which are arranged and designed to receive fastening elements (240).

13. The wind turbine steel tower portion (200, 200', 200", 300, 400) as claimed in at least one of the preceding claims, wherein
- the spacing of the fastening openings (253, 255) in an upper bracket end portion, which faces toward the upper horizontal end, and/or in a lower bracket end portion, which faces toward the lower horizontal end, is smaller than the spacing of the fastening openings (253, 255) in a bracket central portion which is arranged between the upper bracket end portion and the lower bracket end portion.

14. A wind turbine tower (102, 500) comprising two or more wind turbine steel tower portions (200, 200', 200", 300, 400) as claimed in at least one of the preceding claims arranged one above the other.

15. A wind turbine comprising a wind turbine tower (102, 500) as claimed in the preceding claim.

16. A method for producing a wind turbine steel tower portion (200, 200', 200", 300, 400) as claimed in at least one of claims 1-13, **characterized by**
- providing a first wind turbine steel tower ring segment (210, 310, 410, 510) with a first vertical joint side (212), a second wind turbine steel tower ring segment (230, 320, 420, 520) with a second vertical joint side (232) and a bracket element (250, 250', 250", 350, 450, 514, 524);
- arranging the first wind turbine steel tower ring segment (210, 310, 410, 510) and the second wind turbine steel tower ring segment (230, 320, 420, 520) at a joint (205, 405, 512, 522) with the first vertical joint side (212) and the second vertical joint side (232);
- arranging the bracket element (250, 250', 250", 350, 450, 514, 524) at the joint (205, 405, 512, 522);
- connecting the bracket element (250, 250', 250", 350, 450, 514, 524) to the first wind turbine steel tower ring segment (210, 310, 410, 510) and to the second wind turbine steel tower ring segment (230, 320, 420, 520).

## Revendications

1. Section de tour en acier d'éolienne (200, 200', 200'', 300, 400) pour une tour d'éolienne (102, 500) comprenant
- un premier segment annulaire de tour en acier d'éolienne (210, 310, 410, 510) avec une première face de butée verticale (212),
- un second segment annulaire de tour en acier d'éolienne (230, 320, 420, 520) avec une seconde face de butée verticale (232),
- un élément de languette (250, 250', 250'', 350, 450, 514, 524) qui est agencé au niveau d'une butée (205, 405, 512, 522) et est relié au premier segment annulaire de tour en acier d'éolienne (210, 310, 410, 510) et au second segment annulaire de tour en acier d'éolienne (230, 320, 420, 520),
- dans laquelle le premier segment annulaire de tour en acier d'éolienne (210, 310, 410, 510) avec la première face de butée verticale (212) et le second segment annulaire de tour en acier d'éolienne (230, 320, 420, 520) avec la seconde face de butée verticale (232) sont agencés sur la butée (205, 405, 512, 522) l'un sur l'autre, et
- l'élément de languette (250, 250', 250'', 350, 450, 514, 524) présente un élément de raccordement (260, 260', 260", 262, 262', 262'') faisant saillie de l'élément de languette (250, 250', 250", 350, 450, 514, 524) pour l'agencement d'éléments fonctionnels, **caractérisée en ce que**
- l'élément de raccordement (260, 260', 260", 262, 262', 262'') est relié à l'élément de languette (250, 250', 250", 350, 450, 514, 524) par matière ou au moyen d'au moins un élément de fixation (240').

2. Section de tour en acier d'éolienne (200, 200', 200'', 300, 400) selon la revendication précédente, dans laquelle
- l'élément de languette (250, 250', 250", 350, 450, 514, 524) et l'élément de raccordement (260, 260', 260", 262, 262', 262") forment un angle de raccordement (220), et/ou
- l'élément de raccordement (260, 260', 260", 262, 262', 262'') fait saillie dans un sens de saillie et le sens de saillie est orienté sensiblement radialement.

3. Section de tour en acier d'éolienne (200, 200', 200'', 300, 400) selon au moins l'une quelconque des revendications précédentes, dans laquelle
- l'élément de raccordement (260, 260', 260", 262, 262', 262'') est réalisé d'un seul tenant avec l'élément de languette (250, 250', 250", 350, 450, 514, 524), et/ou
- l'élément de raccordement (260, 260', 260", 262, 262', 262'') est relié à l'élément de languette (250, 250', 250", 350, 450, 514, 524).

4. Section de tour en acier d'éolienne (200, 200', 200", 300, 400) selon au moins l'une quelconque des revendications précédentes, dans laquelle
- l'élément de raccordement (260, 260', 260'', 262, 262', 262") est relié à l'élément de languette (250, 250', 250", 350, 450, 514, 524) par soudage.

5. Section de tour en acier d'éolienne (200, 200', 200'', 300, 400) selon au moins l'une quelconque des revendications précédentes, dans laquelle
- l'élément de raccordement (260, 260', 260'', 262, 262', 262'') présente une section de fixation (264, 266), dans laquelle
- l'élément de raccordement (260, 260', 260'', 262, 262', 262'') est relié à la section de fixation (264, 266), et/ou
- l'élément de raccordement (260'', 262'') est réalisé d'un seul tenant avec la section de fixation, et est de préférence réalisé comme élément angulaire.

6. Section de tour en acier d'éolienne (200, 200', 200'', 300, 400) selon au moins l'une quelconque des revendications précédentes, dans laquelle
- l'élément de languette (250, 250', 250'', 350, 450, 514, 524) s'étend d'une première extrémité verticale (256, 256', 256'') à une seconde extrémité verticale (258, 258', 258'') et d'une extrémité horizontale supérieure à une extrémité horizontale inférieure (451), et/ou
- un premier élément de raccordement (260, 260', 260'') est agencé au niveau de la première extrémité verticale (256, 256', 256'') et un second élément de raccordement (262, 262', 262") est agencé au niveau de la seconde extrémité verticale (258, 258', 258''), et/ou
- le premier élément de raccordement (260, 260', 260") et le second élément de raccordement (262, 262', 262'') présentent de préférence le même espacement à une première face de butée horizontale (371) et/ou une première face de butée horizontale inférieure (370) du premier segment annulaire de tour en acier d'éolienne (210, 310, 410, 510) et/ou à une seconde face de butée horizontale supérieure et/ou une seconde face de butée horizontale inférieure du second segment annulaire de tour en acier d'éolienne (230, 320, 420, 520) .

7. Section de tour en acier d'éolienne (200, 200', 200'', 300, 400) selon au moins l'une quelconque des revendications précédentes, dans laquelle l'élément de languette (250, 250', 250'', 350, 450, 514, 524) est agencé sur une surface périphérique intérieure (216, 236) et/ou une surface périphérique extérieure (214, 234) du premier segment annulaire de tour en acier d'éolienne (210, 310, 410, 510) et du second segment annulaire de tour en acier d'éolienne (230, 320, 420, 520) .

8. Section de tour en acier d'éolienne (200, 200', 200'', 300, 400) selon au moins l'une quelconque des revendications précédentes, dans laquelle
- l'élément de languette (250, 250', 250'', 350, 450, 514, 524) présente une première section de languette (252, 252', 252") qui est agencée sensiblement au niveau du premier segment annulaire de tour en acier d'éolienne (210, 310, 410, 510) et/ou une seconde section de languette (254, 254', 254") qui est agencée sensiblement au niveau du second segment annulaire de tour en acier d'éolienne (230, 320, 420, 520),
- dans laquelle la première section de languette (252, 252', 252'') et la seconde section de languette (254, 254', 254'') forment de préférence un angle de languette (257).

9. Section de tour en acier d'éolienne (200, 200', 200'', 300, 400) selon au moins l'une quelconque des revendications précédentes, dans laquelle
- l'élément de languette (250, 250', 250", 350, 450, 514, 524) est agencé avec son sens d'étendue principale sensiblement parallèlement à une hauteur de segment et l'élément de languette (250, 250', 250", 350, 450, 514, 524) présente dans son sens d'étendue principale une étendue de languette de plus de 20 %, de plus de 30 %, de plus de 40 %, de plus de 50 %, de plus de 60 %, de plus de 70 %, de plus de 80 %, de plus de 90 % de l'étendue de segment en direction de la hauteur de segment.

10. Section de tour en acier d'éolienne (200, 200', 200'', 300, 400) selon au moins l'une quelconque des revendications précédentes, dans laquelle
- la première section de languette (252, 252', 252'') est agencée au niveau d'une première section d'extrémité du premier segment annulaire de tour en acier d'éolienne (210, 310, 410, 510), dans laquelle la première section d'extrémité est contiguë à la première face de butée verticale (212), et/ou
- la seconde section de languette (254, 254', 254") est agencée au niveau d'une seconde section d'extrémité du second segment annulaire de tour en acier d'éolienne (230, 320, 420, 520), dans laquelle la seconde section d'extrémité est contiguë à la seconde face de butée verticale (232), et
- la première section d'extrémité et la seconde section d'extrémité forment de préférence un angle de segment.

11. Section de tour en acier d'éolienne (200, 200', 200'', 300, 400) selon au moins l'une quelconque des revendications précédentes, dans laquelle
- l'angle de segment et l'angle de languette (257) sont sensiblement de même taille.

12. Section de tour en acier d'éolienne (200, 200', 200'', 300, 400) selon au moins l'une quelconque des revendications précédentes, dans laquelle
- le premier segment annulaire de tour en acier d'éolienne (210, 310, 410, 510) et/ou le second segment annulaire de tour en acier d'éolienne (230, 320, 420, 520) et/ou l'élément de languette (250, 250', 250'', 350, 450, 514, 524) présentent des ouvertures de fixation (218, 238, 253, 255) qui sont agencées et réalisées afin de recevoir des éléments de fixation (240).

13. Section de tour en acier d'éolienne (200, 200', 200", 300, 400) selon au moins l'une quelconque des revendications précédentes, dans laquelle
- l'espacement des ouvertures de fixation (253, 255) est plus faible dans une section d'extrémité de languette supérieure qui est tournée vers l'extrémité horizontale supérieure, et/ou dans une section d'extrémité de languette inférieure qui est tournée vers l'extrémité horizontale inférieure, que l'espacement des ouvertures de fixation (253, 255) dans une section médiane de languette qui est agencée entre la section d'extrémité de languette supérieure et la section d'extrémité de languette inférieure.

14. Tour d'éolienne (102, 500) comprenant deux ou plusieurs sections de tour en acier d'éolienne (200, 200', 200", 300, 400) agencées les unes au-dessus des autres selon au moins l'une quelconque des revendications précédentes.

15. Eolienne comprenant une tour d'éolienne (102, 500) selon la revendication précédente.

16. Procédé de fabrication d'une section de tour en acier d'éolienne (200, 200', 200'', 300, 400) selon au moins l'une quelconque des revendications 1 à 13, **caractérisé par**
- la fourniture d'un premier segment annulaire de tour en acier d'éolienne (210, 310, 410, 510) avec une première face de butée verticale (212), d'un second segment annulaire de tour en acier d'éolienne (230, 320, 420, 520) avec une seconde face de butée verticale (232) et d'un élément de languette (250, 250', 250'', 350, 450, 514, 524) ;
- l'agencement du premier segment annulaire de tour en acier d'éolienne (210, 310, 410, 510) et du second segment annulaire de tour en acier d'éolienne (230, 320, 420, 520) au niveau d'une butée (205, 405, 512, 522) avec la première face de butée verticale (212) et la seconde face de butée verticale (232) ;
- l'agencement de l'élément de languette (250, 250', 250", 350, 450, 514, 524) au niveau de la butée (205, 405, 512, 522) ;
- la liaison de l'élément de languette (250, 250', 250", 350, 450, 514, 524) avec le premier segment annulaire de tour en acier d'éolienne (210, 310, 410, 510) et le second segment annulaire de tour en acier d'éolienne (230, 320, 420, 520).
